(19) Europäisches Patentamt / European Patent Office / Office européen des brevets

(11) **EP 3 709 058 B1**

(12) **FASCICULE DE BREVET EUROPEEN**

(45) Date de publication et mention
de la délivrance du brevet:
**25.10.2023 Bulletin 2023/43**

(21) Numéro de dépôt: **20161558.0**

(22) Date de dépôt: **06.03.2020**

(51) Classification Internationale des Brevets (IPC):
**G01S 19/21** (2010.01)     **G01S 19/30** (2010.01)

(52) Classification Coopérative des Brevets (CPC):
**G01S 19/21; G01S 19/30**

(54) **PROCÉDÉ DE CONTRÔLE D'INTÉGRITÉ D'UN SIGNAL DE RADIONAVIGATION PAR SATELLITE ET RECEPTEUR APTE À IMPLEMENTER CE PROCÉDÉ.**

VERFAHREN ZUR KONTROLLIEREUNG DER INTEGRITÄT EINES FUNKNAVIGATIONS-SATELLITENSIGNALS UND EMPFÄNGER GEEIGNET ZUR DURCHFÜHRUNG DES VERFAHRENS

METHOD FOR CONTROLLING THE INTEGRITY OF A SATELLITE RADIO-NAVIGATION SIGNAL AND RECEIVER IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2019 FR 1902597**

(43) Date de publication de la demande:
**16.09.2020 Bulletin 2020/38**

(73) Titulaire: **Thales**
**92400 Courbevoie (FR)**

(72) Inventeurs:
• **MARTIN, M. Nicolas**
**26000 VALENCE Cedex (FR)**
• **MILLWOOD, M. Daniel**
**26000 VALENCE Cedex (FR)**
• **ROLLET, M. Stéphane**
**26000 VALENCE Cedex (FR)**

(74) Mandataire: **Atout PI Laplace**
**Immeuble "Visium"**
**22, avenue Aristide Briand**
**94117 Arcueil Cedex (FR)**

(56) Documents cités:
**FR-A1- 2 981 168          FR-A1- 3 017 716**
**US-A1- 2012 286 994     US-A1- 2013 154 880**

• **GUO QIANG ET AL: "Multiple interferences suppression method based on adaptive signal data regrouping for GNSS receivers", IET RADAR SONAR NAVIGATION, THE INSTITUTION OF ENGINEERING AND TECHNOLOGY, UK, vol. 12, no. 6, 1 juin 2018 (2018-06-01), pages 641-648, XP006067469, ISSN: 1751-8784, DOI: 10.1049/IET-RSN.2017.0410**

**Description**

**Domaine technique de l'invention**

L'invention concerne le domaine de systèmes de traitement de signaux de radionavigation par satellites ou pseudolites, et concerne plus précisément les récepteurs GNSS comprenant une fonction de traitement anti-interférence.
L'invention porte plus spécifiquement sur un procédé et une fonction de contrôle d'intégrité au regard d'un risque de faux accrochage pour un récepteur GNSS comprenant une fonction de traitement anti-interférence.

**Etat de la technique**

Les systèmes de positionnement par satellites (désignés GNSS pour « Global Navigation Satellite System » en anglais) mettent en oeuvre plusieurs satellites transmettant des signaux radioélectriques et un récepteur GNSS placé à la position à localiser estimant les distances dites « pseudo-distances », qui le séparent des satellites à partir des temps de propagation des signaux satellites reçus multipliés par la vitesse de la lumière dans le milieu traversé. A partir des mesures des pseudo-distances séparant le récepteur des satellites visibles et de la connaissance des positions de ces satellites, le récepteur déduit sa position précise en latitude, longitude, et en altitude dans un repère terrestre par une résolution numérique de type triangulation. Plus les positions des satellites sont connues du récepteur avec précision et plus les mesures des pseudo-distances faites par le récepteur sont précises, plus la localisation obtenue est précise. Les positions des satellites sont déterminées à partir d'un réseau de stations au sol indépendant des récepteurs de positionnement. Les positions des satellites sont communiquées aux récepteurs de positionnement par les satellites eux-mêmes par les données modulant les signaux émis.
Les pseudo-distances sont déduites par les récepteurs de positionnement des retards apparents présentés par les signaux reçus. Ces signaux sont datés à l'émission par les horloges des satellites, qui sont synchronisées sur le temps système, et à la réception par l'horloge du récepteur, pouvant présenter un biais par rapport au temps du système. Les distances déduites des temps de propagation ainsi mesurés sont appelées pseudo-distances car elles sont entachées d'une erreur commune pouvant être importante, due au biais de l'horloge du récepteur, biais qui peut être éliminé si les signaux d'au moins quatre satellites sont reçus.
Les signaux radioélectriques émis par des satellites parcourant de grandes distances étant émis avec des puissances limitées, ils parviennent avec de très faibles puissances aux récepteurs, noyés dans un bruit radioélectrique dû à l'environnement physique. Pour faciliter la réception des signaux émis par les satellites et les rendre moins sensibles aux parasites (ou interférences), notamment à bande étroite, les largeurs de bande des signaux émis sont étalées au moyen de la technique de la bande étalée, également désignée « technique d'étalement de spectre ». Ainsi, les signaux émis par les satellites sont constitués d'une porteuse de signal modulée par un code d'étalement. Plus spécifiquement, les signaux émis par les satellites sont formés par modulation de la porteuse du signal avec un code d'étalement formé par une séquence binaire pseudo-aléatoire. La modulation de la porteuse par un code d'étalement étale le spectre, ce qui accroît la résistance du système aux interférences. Et, en outre, cela permet de dissocier les satellites (en utilisant un code d'étalement différent par satellite). En d'autres termes, l'identification du satellite émetteur d'un signal radioélectrique peut se faire à partir du code d'étalement qui lui est réservé. Dans la suite de la présente invention, on pourra utiliser par simplification le terme « code » pour désigner le terme « code d'étalement ».
Dans le récepteur, le signal satellite est reçu via au moins une antenne (une antenne pouvant comprendre un ou plusieurs capteurs) et les informations contenues dans un signal radioélectrique du satellite sont extraites par deux démodulations successives, afin d'en déduire une mesure de temps de propagation, de Doppler ou de phase de porteuse, et éventuellement de données transmises : une première démodulation à l'aide d'une porteuse engendrée localement par un oscillateur piloté par une boucle de poursuite en fréquence, dite FLL (sigle issu des termes anglais Frequency Lock Loop), ou en phase, dite PLL (sigle issu des termes anglais Phase Lock Loop), également désignées par « boucle de phase de porteuse », ou « boucle de porteuse » permettant de transposer le signal reçu en bande de base et une deuxième démodulation à l'aide d'un code d'étalement engendré localement par un générateur de code piloté par une boucle de poursuite en retard dite DLL (sigle issu des termes anglais Delay Lock Loop), également désignée par « boucle de code » permettant de démoduler la suite de données binaires présente dans le signal reçu. En général, il y a au niveau du récepteur un canal par satellite (désigné « canal satellite »), avec un code d'étalement par canal propre au satellite poursuivi, ainsi qu'une boucle de code et une boucle de porteuse par canal, comme cela est expliqué par exemple dans la demande de brevet FR2892202.
La démodulation consiste à asservir un signal généré localement, de manière à former une image du signal reçu en provenance du satellite considéré caractérisé par un code d'étalement propre et une porteuse, c'est-à-dire en répliquant localement le code, et en recherchant le maximum de corrélation entre ce signal reçu et le signal répliqué (nommé « signal local »). L'asservissement est réalisé par la boucle de porteuse, qui pilote la phase de la porteuse locale, et par la boucle de code qui pilote la phase du code local. La boucle de porteuse mesure un écart de phase de porteuse entre le signal local et le signal reçu grâce à la corrélation avec un signal local. La boucle de code mesure un écart de phase de code entre le signal local et le signal reçu grâce à la corrélation avec des signaux locaux modulés par des codes dérivés (avance, retard ou ponctuel). On appelle cette phase de démodulation la « phase de poursuite ». Le terme « poursuite » représente la capacité à se synchroniser avec les signaux satellites en utilisant par rétroaction les écarts de phase entre un signal local et un signal reçu.

La démodulation comprend, préalablement à la phase de poursuite, une phase d'acquisition qui permet d'initialiser le fonctionnement des boucles de poursuite. En effet, ni la position (ou phase) du code reçu, ni la fréquence Doppler ne sont connus a priori, or les boucles de poursuite ne peuvent fonctionner que si la position du code et la fréquence Doppler sont proches de celles du signal issu du satellite considéré. Le principe mis en oeuvre lors de la phase d'acquisition est d'essayer plusieurs hypothèses sur la position du code d'étalement, ainsi que sur la valeur du Doppler et de rechercher un pic de corrélation entre le signal local et le signal reçu, avec un pas d'échantillonnage suffisamment fin pour ne pas manquer le pic principal de la fonction d'auto-corrélation du code d'étalement.

Par fonction d'auto-corrélation, on entend une corrélation du code d'étalement par le même code décalé dans le temps et filtré. La fonction donne un résultat de corrélation en fonction du décalage. Le décalage désigné $\tau$ correspond à une avance du code reçu par rapport au code local. Les valeurs de la fonction d'autocorrélation peuvent être complexes, avec une partie réelle et une partie imaginaire, notamment à cause du filtrage appliqué au signal reçu.

Une fois qu'un pic a été trouvé, la recherche de la phase du code et du Doppler est affinée en diminuant le pas d'échantillonnage, autour du premier pic détecté. Quand la précision obtenue est jugée suffisante, on passe alors en phase de poursuite : on ferme les boucles pour les faire converger vers le maximum de corrélation. Lorsque le pic de corrélation est déterminé et que les boucles sont fermées, on dit que les boucles sont « accrochées », on considère alors que le code d'étalement engendré localement est en phase avec le code du satellite recherché contenu dans le signal reçu. Cette recherche de pic de corrélation est également nommée « accrochage ». On précise que le terme « pic » désigne un extremum local, qui peut être un maximum local lorsqu'il concerne des valeurs absolues.

Le temps de propagation d'un satellite est obtenu à chaque instant par la différence entre la date d'émission du signal reçu, calculée à partir de la phase du code local, image du code reçu, et la date de réception du signal reçu, donnée par l'horloge du récepteur. Et le positionnement du récepteur est obtenu en mesurant la pseudo-distance entre un satellite et le récepteur à partir du temps de propagation du signal entre ce satellite et le récepteur.

Un exemple de calcul de corrélation réalisé lors de la phase d'acquisition est par exemple décrit dans la demande de brevet FR2898998. Un code d'étalement est typiquement constitué d'un grand nombre de divisions temporelles élémentaires, appelées « chips » de code. Dans la demande de brevet FR2898998, $D_{chip}$ désigne la durée moyenne de la division temporelle élémentaire du code (pendant chaque chip, le code conserve une valeur constante), C1(t) désigne le code local généré par un récepteur d'un système de positionnement par satellite, et S(t) le signal de radionavigation reçu par le récepteur, ce signal analogique étant échantillonné à une fréquence $F_e$ supérieure à $2/D_{chip}$. Un calcul de corrélation entre un signal reçu et un code généré localement est réalisé en plusieurs étapes :

- réaliser un échantillonnage du code C1 synchrone de l'échantillonnage du signal reçu,
- multiplier deux à deux les échantillons du code C1 et du signal reçu, correspondant à une même date d'échantillonnage, sur la durée $D_{Code}$ pour déterminer $N_{ech}$ résultats de produits d'échantillons, $N_{ech}$ étant le produit de la fréquence $F_e$ et de la durée $D_{Code}$ ;
- sommer les résultats de produits d'échantillons.

Le résultat du calcul de corrélation peut ainsi s'exprimer sous la forme suivante :

[Math 1] :

$$\text{Corrélation1} = \sum_{i=1}^{Nech} S(t_i)C1(t_i)$$

où i est un indice d'échantillonnage, $t_i$ est la i-ème date d'échantillonnage du signal reçu S, $S(t_i)$ est la valeur du signal S à la date $t_i$ et $C1(t_i)$ est la valeur du code à la date $t_i$.

Malgré la technique d'étalement de spectre, les systèmes de radionavigation par satellite peuvent être perturbés par des sources interférentes, intentionnelles ou non, par exemple des sources émettant un signal sur une fréquence proche de celle du signal de radionavigation ou présentant des harmoniques autour de la fréquence du signal de radionavigation, ce qui peut compromettre la fiabilité du système de radionavigation par satellite.

Des techniques existent afin de caractériser et de supprimer ces sources interférentes.

Par exemple, il est connu d'appliquer un traitement aux signaux reçus, et ce, avant leur démodulation, qui consiste à couper le signal reçu lorsqu'un tel signal interférent est détecté, ce qui entraine une perturbation de la réception des signaux utiles. Ce système est connu sous le terme anglais de « blanking ». Selon le nombre de signaux interférents reçus, la proportion de coupures ou « blanking » est plus ou moins grande et à la limite on ne reçoit plus assez de signal et il n'y a alors aucun moyen de récupérer un signal utile.

D'autres techniques existent, telles que celles explicitées par exemple dans les demandes de brevet FR2981168 ou FR3017716, qui utilisent une technique de filtre linéaire appliquée aux signaux reçus par le récepteur, et ce, avant leur démodulation. Les coefficients du filtre linéaire sont calculés de manière à ce que la réponse en fréquence atténue l'énergie de l'interférence dans les bandes de fréquence où elle est présente. Il peut s'agir d'un filtre STAP des termes anglais « Spatio Temporal Adaptive Processing » utilisé typiquement lorsque le récepteur comprend plusieurs antennes ou une antenne à plusieurs capteurs ou d'un filtre TAP des termes anglais « Temporal Adaptive Processing » utilisé lorsque le récepteur comprend une antenne à un seul capteur. Une autre technique alternative au TAP est un filtre FDAF des termes anglais « Frequency Domain Adaptive Filtering ».

Si l'énergie d'une interférence se situe au centre du spectre du signal satellite, il en résulte un trou au milieu du spectre dont la conséquence est l'apparition de pics secondaires à côté du pic principal de la fonction d'auto-corrélation.

Or comme indiqué plus avant, lors de la phase d'acquisition, un récepteur ou un canal satellite du récepteur recherche un pic de corrélation pour s'accrocher dessus en verrouillant les boucles de code et de porteuse. Les boucles restent accrochées sur un pic local de la fonction de corrélation lors de la phase de poursuite. Lorsque l'on a plusieurs pics dans la fonction de corrélation, il y a un risque que le canal satellite s'accroche sur un pic secondaire, pouvant conduire à des erreurs de positionnement significatives voire inacceptables, jusqu'à quelques dizaines voire quelques centaines de mètres. Selon l'invention, cet évènement sera nommé « faux accrochage ». Un faux accrochage peut dégrader le niveau d'intégrité du système de navigation par satellite. L'invention vise à surmonter l'inconvénient précité.

L'invention vise à disposer d'une fonction de contrôle d'intégrité d'un récepteur GNSS comprenant un traitement anti-interférence, plus précisément une fonction apte à détecter un risque de faux accrochage, afin d'éviter un risque de mesures erronées non détectées.

De manière avantageuse, si un risque de faux accrochage a été détecté, l'invention vise à déterminer si le risque est avéré et donc si un faux accrochage a effectivement eu lieu.

De manière avantageuse, l'invention vise à corriger le défaut d'accrochage avéré.

**Exposé de l'invention**

L'invention permettant de résoudre les problème précités concerne un procédé de contrôle d'intégrité du traitement d'un signal de radionavigation émis par un satellite d'un système de positionnement par satellites, ledit signal étant reçu par un récepteur comportant des moyens de réception et des moyens de traitement, lesdits moyens de traitement comprenant un filtre linéaire anti-interférence, ledit procédé de contrôle d'intégrité étant caractérisé en ce qu'il comporte au moins une première phase de détection d'un risque de faux accrochage comprenant les étapes suivantes :

- une étape de récupération d'une fonction d'auto-corrélation théorique nominale du signal reçu non traité par le filtre linéaire anti-interférence ;
- une étape de détermination d'une fonction d'auto-corrélation théorique moyenne dudit signal reçu et traité par le filtre linéaire anti-interférence sur une période d'intégration définie ;
- une étape de détermination du nombre de maximum locaux du module ou du module au carré de la fonction d'auto-corrélation théorique moyenne, un risque de faux accrochage étant détecté si ledit nombre de maximum locaux est supérieur ou égal à deux.

Le signal reçu non filtré a une fonction d'auto-corrélation théorique nominale. Le signal reçu et filtré a une fonction d'auto-corrélation théorique qui est modifiée du fait du filtrage. L'invention nécessite de connaître cette fonction d'auto-corrélation théorique modifiée.

Ainsi l'invention consiste à calculer la fonction de corrélation théorique moyenne du signal reçu et traité par le filtre linéaire anti-interférence sur une période d'intégration définie. Cette fonction d'autocorrélation théorique moyenne renseigne sur la présence de pics secondaires (donc d'au moins deux pics, le pic principal et au moins un pic secondaire) et donc un risque de faux accrochage. Plus largement, l'invention consiste donc en la recherche des pics de la fonction d'autocorrélation théorique moyenne.

La fonction d'autocorrélation d'un signal de radionavigation émis par un satellite n'est généralement pas réelle mais complexe (avec une partie réelle et une partie imaginaire), notamment lorsqu'un filtrage anti-interférence a été appliqué au signal émis. C'est pourquoi, on recherche le (ou les) maximum du module ou du module au carré de la fonction d'autocorrélation théorique moyenne. Le cas où la fonction d'autocorrélation théorique moyenne est réelle est un cas particulier.

Un maximum local se définit comme étant un maximum sur un intervalle non nul. En pratique, comme on travaille généralement sur des valeurs discrètes espacées de la période d'échantillonnage Te, l'intervalle peut avoir une largeur égale à 2 fois la période d'échantillonnage Te (qui peut correspondre à l'espacement minimal entre les corrélateurs avance et retard comme cela sera expliqué plus après).

Selon un mode de réalisation, le procédé comprend une étape de détermination d'un filtre anti-interférence moyen sur la période d'intégration, préalablement à l'étape de détermination de la fonction d'auto-corrélation théorique moyenne, ladite fonction d'auto-corrélation théorique moyenne étant déterminée à partir de la fonction d'auto-corrélation théorique nominale et dudit filtre anti-interférence moyen.

Selon un mode de réalisation, le filtre anti-interférence moyen sur la période d'intégration est déterminé à partir des différentes valeurs des coefficients du filtre anti-interférence calculés sur ladite période d'intégration.

Selon un mode de réalisation, le procédé comprend en outre :

- une étape de définition d'un premier seuil, ledit premier seuil étant fonction de l'écart entre le rapport signal sur bruit maximum et un seuil de poursuite ;
- le nombre de maximum locaux déterminés correspondant au nombre de maximum locaux pour lesquels la valeur du module ou du module au carré de la fonction d'auto-corrélation moyenne finale est supérieure ou égale audit premier seuil.

En particulier, le premier seuil est défini par la relation mathématique Math40 définie plus après et reproduite ici :

$$S1 = \frac{\max(\|\max(A_0)\|^2)}{10^{\frac{x}{10}}}$$

où x représente l'écart entre le rapport signal sur bruit maximum et un seuil de poursuite et A0 la fonction d'auto-corrélation théorique nominale.

Selon un mode de réalisation, le procédé comprend en outre une étape de déclenchement d'alarme si le nombre de maximum locaux déterminés est supérieur ou égal à deux.

Selon un mode de réalisation dans lequel les moyens de traitement du signal reçu comprennent un canal de traitement par satellite, chaque canal comportant une boucle de code apte d'une part à générer localement un code d'étalement caractéristique du satellite associé audit canal de manière à former un signal local et apte d'autre part à asservir ledit signal local avec ledit signal reçu en utilisant une voie de corrélation entre ledit signal reçu et ledit signal local, la période d'intégration est déterminée en fonction de la période de ladite boucle de code, également dénommée « période de boucle ».

Selon un mode de réalisation particulier, la période d'intégration est sensiblement égale à la période de boucle.

Selon un mode de réalisation dans lequel les moyens de traitement du signal reçu comprennent un canal de traitement par satellite, chaque canal comportant une boucle de code apte à générer localement des codes d'étalement caractéristiques du satellite associé audit canal, lesdits codes comprenant au moins un code ponctuel, un code retard et/ou un code avance formant chacun un signal local, chaque signal local ponctuel, retard et/ou avance étant corrélé avec le signal reçu en utilisant respectivement une voie de corrélation ponctuelle, une voie de corrélation retard et/ou une voie de corrélation avance, le procédé comporte en outre une deuxième phase de détection d'un faux accrochage, ladite deuxième phase comprenant :

- une étape de calcul de vraisemblance entre la fonction d'auto-corrélation théorique moyenne et une fonction d'auto-corrélation mesurée pour chacune de l'ensemble des voies de corrélation ponctuelle, retard et/ou avance ;
- une étape de comparaison du résultat de calcul de vraisemblance avec un deuxième seuil, un faux accrochage étant détecté par un résultat du calcul de vraisemblance inférieur audit deuxième seuil.

Selon un mode de réalisation particulier, le résultat de l'étape de calcul de vraisemblance utilise un critère nominal de vraisemblance défini par la relation mathématique Math41 définie plus après et reproduite ici :

$$Critère0 = \frac{\left(\sum_{i=1}^{NC} A(q_i).A_{mes}(q_i)\right)^2}{\left(\sum_{i=0}^{NC}\|A(q_i)\|^2\right)\left(\sum_{i=0}^{NC}\|A_{mes}(q_i)\|^2\right)}$$

où $q_i$ est la position du corrélateur n°i et NC le nombre de voies de corrélations.

Selon un mode de réalisation, le procédé comporte en outre une troisième phase de recherche du maximum local principal, ladite troisième phase effectuant une recherche du maximum local principal si le résultat du calcul de vraisemblance est inférieur au deuxième seuil, et comprenant les étapes suivantes :

- une j-ème étape de calcul de vraisemblance entre la fonction d'auto-corrélation théorique moyenne translatée d'une j-ème valeur de translation par rapport à la position des voies de corrélation, et la fonction d'auto-corrélation mesurée pour chacune de l'ensemble des voies de corrélation, la j-ème valeur de translation correspondant à un j-ème maximum local ;
- une étape de comparaison du résultat du j-ème calcul de vraisemblance avec un troisième seuil, un résultat dudit j-ème calcul de vraisemblance supérieur audit troisième seuil permettant de déterminer si la j-ème valeur de translation correspond au maximum local principal.

Le calcul est réalisé pour chaque j-ème maximum local déterminé lors de la première phase de détection d'un risque de faux accrochage. Ainsi j est au moins égal à deux. On fixe de préférence un troisième seuil de telle sorte qu'on soit assuré de déterminer le maximum local principal. Si on trouve au moins deux maximum locaux au-dessus du troisième seuil on peut relever le troisième seuil ou reproduire le calcul de vraisemblance en considérant un quatrième seuil supérieur au troisième seuil.

Selon un mode de réalisation particulier, le résultat de l'étape de calcul de vraisemblance utilise un j-ème critère de vraisemblance défini par la relation mathématique Math42 définie plus après et reproduite ici :

$$Critère\ j = \frac{\left(\sum_{i=1}^{NC} A(q_i + d_i).A_{mes}(q_i)\right)^2}{\left(\sum_{i=0}^{NC} \|A(q_i + d_i)\|^2\right)\left(\sum_{i=0}^{NC} \|A_{mes}(q_i)\|^2\right)}$$

où $d_j$ est la j-ème valeur de translation, $q_i$ est la position de la i-ème voie de corrélation et NC le nombre de voies de corrélations.

L'invention concerne également un récepteur d'un système de positionnement par satellites comportant des moyens de réception aptes à capter un signal émis par lesdits satellites et des moyens de traitement aptes à traiter le signal reçu, lesdits moyens de traitement comprenant un filtre linéaire anti-interférence, ledit récepteur comprenant une première fonction apte à implémenter la première phase de détermination d'un risque de faux accrochage du procédé selon l'invention.

Selon un mode de réalisation, le récepteur comprend en outre une deuxième fonction couplée à la première fonction et apte à implémenter la deuxième phase de détection d'un faux accrochage du procédé selon l'invention.

Selon un mode de réalisation, le récepteur comprend en outre une troisième fonction couplée à la première et la deuxième fonction et apte à implémenter la troisième phase de recherche du maximum local principal du procédé selon l'invention.

Ainsi, l'invention permet de disposer d'un procédé et d'une fonction de contrôle d'intégrité pour un récepteur d'un système de traitement de signaux de radionavigation par satellites ou pseudolites, et plus précisément pour un récepteur comprenant un traitement anti-interférence. L'invention permet de détecter un risque de faux accrochage, comme défini plus avant, afin d'éviter un risque de mesures erronées non détectées. L'invention permet a minima de transformer une non intégrité en non continuité, à savoir que le récepteur préfère ne pas fournir de mesure, plutôt que de risquer de fournir une mesure erronée sans prévenir. Par exemple, dans ce cas, un pilote d'aéronef pourra choisir de dérouter l'aéronef ou de temporiser l'atterrissage le temps de retrouver des mesures de position garanties intègres par le récepteur, en évitant ainsi un risque d'accident.

En outre, grâce à la deuxième phase de détection d'un faux accrochage, l'invention permet de vérifier si le risque de faux accrochage est avéré ou non. Cela permet d'éviter une non-continuité de la mesure en réduisant le risque de fausse alarme. Par exemple, dans le cas d'un atterrissage d'aéronef, cela permet d'éviter un déroutage coûteux, voire dangereux.

Enfin, en cas de faux accrochage avéré, la troisième phase de recherche du maximum local principal permet de retrouver rapidement une mesure intègre en évitant de refaire une phase d'acquisition, généralement chronophage, réduisant ainsi la durée de non continuité de la mesure.

D'une manière générale, le procédé selon l'invention comprend des opérations qui peuvent être exécutées de manière rapide et qui sont simples de mise en oeuvre. Elles n'augmentent pas significativement la charge du (ou des) processeur(s) en place. L'invention peut notamment être mise en oeuvre sous la forme de lignes de codes supplémentaires ajoutées à un (ou des) processeur(s) et/ou circuit(s) imprimé(s) existant(s), ou plus généralement à tout support adapté pour implémenter des lignes de codes dans le récepteur. Ainsi, l'invention ne nécessite pas de revoir toute la conception du récepteur.

**Brève description des figures**

D'autres caractéristiques et avantages de l'invention apparaîtront à l'aide de la description qui suit, donnée à titre illustratif et non limitatif, faite en regard des figures annexées parmi lesquelles :

[Fig.1] représente un exemple de récepteur GNSS selon l'invention ;

[Fig.2] est une vue détaillée de la fonction réalisée par un filtre linéaire anti-interférence FIR n°m de la figure 1 ;

[Fig.3] est une vue détaillée d'une partie de la vue représentée en figure 1 illustrant un mode de calcul de la matrice d'intercorrélation Rxx ;

[Fig.4] illustre plus en détail le calcul de la matrice d'intercorrélation Rxx représenté en figure 3 ;

[Fig.5] illustre un module de détermination de la localisation d'un récepteur GNSS ;

[Fig.6A] représente un premier exemple de fonction théorique nominale d'auto-corrélation.

[Fig 6B] représente un second exemple de fonction théorique nominale d'auto-corrélation.

[Fig 7A] représente deux fonctions d'auto-corrélation théorique et mesurée, illustrant un bon accrochage.

[Fig 7B] illustre deux fonctions d'auto-corrélation théorique (en trait plein) et théorique décalée (en pointillés), le décalage illustrant un faux accrochage.

**Description détaillée de l'invention**

La description détaillée de l'invention est basée sur un exemple de procédé de traitement anti-interférence d'un signal radioélectrique émis par un satellite, ledit procédé comprenant les étapes suivantes :

- réception, en M points d'entrée (antennes et/ou capteurs) distincts dudit signal radioélectrique ;
- détermination de la corrélation entre eux d'échantillons de signal issus de la réception, à L instants distincts et auxdits M points d'entrée, dudit signal, puis détermination de coefficients de pondération W en fonction de ladite corrélation déterminée, M et L étant des entiers positifs, M étant strictement supérieur ou égal à 1, et L étant strictement supérieur à 1 ;
- obtention d'un signal traité anti-interférence ($S_{traité}$) par combinaison linéaire desdits échantillons de signal issus de la réception à L instants distincts, auxdits M points d'entrée et pondérés par lesdits coefficients de pondération W.

Le traitement anti-interférence est effectué au niveau d'un récepteur.

Un exemple de traitement anti-interférence est un filtre STAP (en anglais « Spatio Temporal Adaptative Processing ») et dans ce cas $S_{traité}$ est $S_{stap}$ ; ou un filtre TAP (en anglais « Temporal Adaptative Processing ») si M est égal à 1 (une seule antenne à un seul capteur) et dans ce cas $S_{traité}$ est $S_{tap}$ ; ou encore un filtre FDAF (en anglais « Frequency Domain Adaptive Filtering ») et dans ce cas $S_{traité}$ est $S_{fdaf}$.

Pour rappel, dans un système de positionnement par satellites, plusieurs satellites transmettent des signaux radioélectriques (RF). Un récepteur, positionné sur la position à localiser, reçoit les signaux satellites à l'aide de M points d'entrée (antennes ou capteurs), et les numérise. Puis le récepteur peut effectuer un traitement anti-interférence sur ces signaux reçus, par exemple à l'aide d'une parmi les méthodes STAP, TAP ou FDAF selon laquelle le signal traité est une combinaison linéaire des signaux reçus sur les M capteurs et de leurs L versions retardées, pondérés par des coefficients de pondérations W calculés pour rejeter l'interférence tout en conservant les signaux satellite utiles. Le filtre linéaire est appliqué avec des coefficients W remis à jour périodiquement selon une période de rafraîchissement $T_W$ en fonction de l'interférence rencontrée et caractérisée par exemple par sa matrice d'intercorrélation calculée sur le signal reçu. Ainsi, le traitement de filtrage nécessite le calcul préalable d'une matrice d'intercorrélation, nommée $R_{xx}$, pour caractériser les interférences à éliminer.

En aval du traitement anti-interférence, le récepteur effectue un traitement en deux phases successives du signal traité anti-interférence, une phase d'acquisition et une phase de poursuite. La phase d'acquisition a pour but de synchroniser un code et une porteuse générés dans le récepteur avec le code et la porteuse du signal reçu du satellite et prétraité comme illustré plus après. Le critère de synchronisation correspond à la maximisation de la corrélation des deux signaux, c'est-à-dire à la recherche d'un pic dans des résultats de corrélation entre le signal reçu et le signal local, qui comme indiqué plus avant est également nommée « accrochage ».

Le but de l'invention est de détecter un risque de faux accrochage. Une détection de faux accrochage constitue un moyen de contrôle d'intégrité du traitement du signal reçu dans le récepteur.

Ensuite, la phase de poursuite a pour but de maintenir la meilleure synchronisation du code local et de la phase de la porteuse locale avec le code et la phase de la porteuse du signal reçu, de manière à produire une mesure de la position du code et de la phase de la porteuse pour le calcul de positionnement du récepteur. Cette phase de poursuite consiste à fermer les boucles de poursuite de code (DLL) et de phase de porteuse (PLL). Puis le récepteur estime les distances qui le séparent des satellites à partir des temps de propagation des signaux satellites démodulés, et détermine alors la localisation recherchée par triangulation sur la base de ces distances.

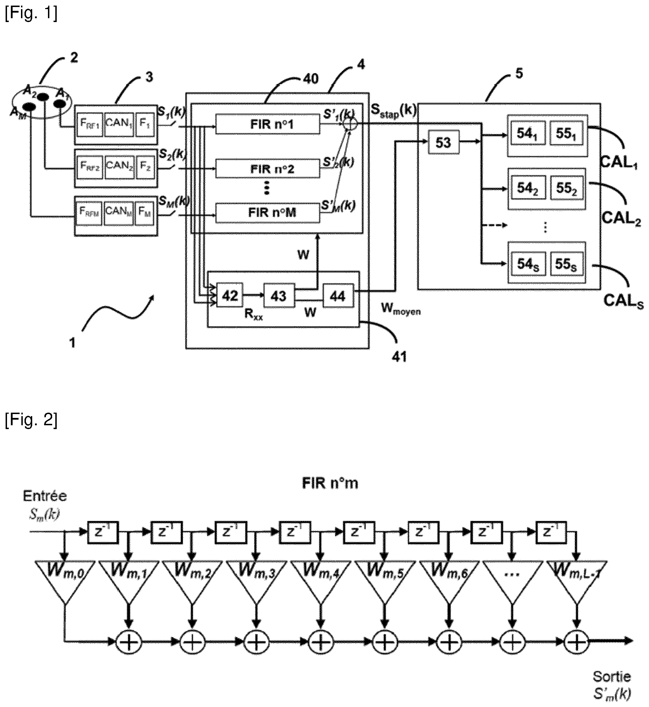

La figure 1 représente un exemple de récepteur 1 d'un système de navigation par satellite utilisant des signaux provenant de S satellites $SAT_s$ (s = 1 à S) et comprenant une fonction de contrôle d'intégrité selon l'invention. Le récepteur 1 illustré implémente un traitement anti-interférence. Chaque satellite $SAT_s$ du système génère un signal radiofréquence à l'aide d'une porteuse sinusoïdale (fréquence de 1,2 à 1,6 GHz), modulée par un code d'étalement binaire connu propre à chaque satellite (fréquence de 1 à 10 MHz), puis émet le signal radiofréquence RF ainsi généré. Les codes d'étalement sont constitués d'un grand nombre de divisions temporelles élémentaires, appelées « chips » de code qui ont une durée égale à Tc.

Le récepteur 1 comporte des moyens de réception 2 des signaux satellites, par exemple une antenne à diagramme de rayonnement contrôlé CRPA (en anglais « Controled Radiation Pattern Array ») comportant M capteurs $A_m$, m variant entre 1 et M, avec M nombre entier supérieur ou égal à 1. Dans la figure 1, on a représenté 3 capteurs (M est donc égal à 3).

Le récepteur 1 comporte en outre un module 3 de prétraitement comportant M voies, un module 4 de traitement anti-interférence et un module 5 de détermination de la localisation du récepteur qui comprend des moyens pour la démodulation du signal reçu, prétraité et traité anti-interférence.

Chacun des M capteurs est adapté pour capter les signaux radiofréquences RF présents dans sa bande de fréquences de fonctionnement, puis pour délivrer un signal radiofréquence analogique tel que $S_m(t)$, m = 1 à M, au module 3 de prétraitement.

Le module 3 de prétraitement comprend M voies parallèles correspondant chacune à un capteur $A_m$. Chaque voie m du module 3 de prétraitement comporte au moins un filtre analogique $F_{RFm}$, un convertisseur analogique-numérique $CAN_m$ réalisant un échantillonnage et une numérisation du signal $S_m(t)$, à la fréquence d'échantillonnage Fe (la période d'échantillonnage Te étant l'inverse de la fréquence d'échantillonnage Fe), et un module $F_m$ de passage en bande de base dans lequel le signal reçu numérisé réel est multiplié par un signal numérique complexe de type exp( $2j\pi$ Fe/4 $t_k$ ) et délivre en sortie de la voie numéro m, au module de traitement anti-interférence 4, les échantillons $S_m(k)$ d'un signal numérique complexe, où k entier indique l'indice d'un instant $t_k$ d'échantillonnage, m est l'indice de capteur (m = 1 à M) et $t_k$ est égal à :

$$[\text{Math2}]$$

$$t_k = t_0 + k/Fe$$

où $t_0$ est le début de l'échantillonnage.

Le module de traitement anti-interférence 4 comporte un bloc principal 40 de rejet des interférences et un bloc secondaire 41 de détermination de coefficients de pondération utilisés par le bloc principal 40.

Le bloc principal 40 de rejet des interférences est adapté pour effectuer le traitement de filtrage linéaire STAP. Il comporte M voies parallèles, opérant à la fréquence Fe. Le signal $S_m(k)$ y est reçu en entrée de la même voie m, puis est fourni à l'entrée d'un filtre numérique à réponse impulsionnelle finie (dénommé « FIR n°m ») qui est illustré plus en détail à la figure 2. Le FIR n°m comporte L-1 éléments à retards unitaires complexes réalisés par l'opérateur $Z^{-1}$. La sortie complexe de chaque élément à retard d'indice l est multipliée par un coefficient de pondération complexe $W_{m,l}$. Le signal en sortie du filtre FIR n°m est égal à la somme des sorties complexes des L-1 éléments multipliées par les coefficients de pondération complexes.

Ainsi le FIR n°m délivre en sortie un signal :

[Math3]

$$S'_m(k) = \sum_{l=0 \text{ à } L-1} W_{m,l}.S_m(k-l)$$

Les signaux S'$_m$(k) sont ensuite sommés pour m compris entre 1 et M dans le bloc principal 40. Cela équivaut à la formule :

[Math4]

$$S_{stap}(k) = \sum_{m=1 \text{ à } M} \left( \sum_{l=0 \text{ à } L-1} W_{m,l}.S_m(k-l) \right)$$

Où m est l'indice des capteurs (compris entre 1 et M), l est l'indice des retards (compris entre 0 et L-1), k est l'indice de l'instant d'échantillonnage.

Le bloc secondaire 41 de détermination de coefficients de pondération est adapté pour déterminer les valeurs actualisées (selon la période de rafraîchissement $T_W$) des coefficients de pondérations $W_{m,l}$ utilisés par le bloc principal 40.

Dans le mode de réalisation considéré, le bloc secondaire 41 comprend un sous-bloc 42 d'intercorrélation et un sous-bloc 43 de calcul des coefficients de pondération.

Le sous-bloc 42 d'intercorrélation est adapté pour calculer la corrélation entre les signaux issus des M différents capteurs, et/ou leurs versions retardées de 0 à L-1 échantillons, par exemple via le calcul de la matrice d'intercorrélation $R_{xx}$.

La matrice $R_{xx}$ peut être représentée sous forme d'une matrice à coefficients matriciels :

[Math5]

$$R_{xx} = \begin{bmatrix} [R_0] & \cdots & [R_l^{*T}] & [R_{l+1}^{*T}] & [R_{l+2}^{*T}] & \cdots & [R_{L-1}^{*T}] \\ \vdots & & \vdots & \vdots & \vdots & & \vdots \\ [R]_l & & [R_0] & [R_1^{*T}] & [R_2^{*T}] & & [R_{l+2}^{*T}] \\ [R_{l+1}] & & [R_1] & [R_0] & [R_1^{*T}] & & [R_{l+1}^{*T}] \\ [R_{l+2}] & & [R_2] & [R_1] & [R_0] & & [R_l^{*T}] \\ \vdots & & \vdots & \vdots & \vdots & & \vdots \\ [R_{L-1}] & \cdots & [R_{l+2}] & [R_{l+1}] & [R_l] & \cdots & [R_0] \end{bmatrix}_{L.M \times L.M}$$

$R_{xx}$ a ses coefficients matriciels identiques sur chaque diagonale (matrice de Toeplitz). En outre, $R_{xx}$ est symétrique, au sens hermitien (i.e. $R^T$ est égal à $R^*$), de même que $R_0$.

Pour l variant de 0 à L-1, on a :

[Math6]

$$R_l = \begin{bmatrix} r_{1,1,l} & \cdots & r_{1,m,l} & \cdots & r_{1,M,l} \\ \vdots & & \vdots & & \vdots \\ r_{m,1,l} & \cdots & r_{m,m,l} & \cdots & r_{m,M,l} \\ \vdots & & \vdots & & \vdots \\ r_{M,1,l} & \cdots & r_{M,m,l} & \cdots & r_{M,M,l} \end{bmatrix}_{M \times M}$$

Les coefficients $r_{m,n,l}$ de la matrice $[R_l]$ sont obtenus par la formule :

[Math7]

$$r_{m,n,l}(i) = \int_{(i-1)T_W}^{iT_W} \rho_{m,n,l}(t)\, dt = \sum_{(i-1)T_W/T_e}^{iT_W/T_e} S_m(k).S_n(k-l)^*$$

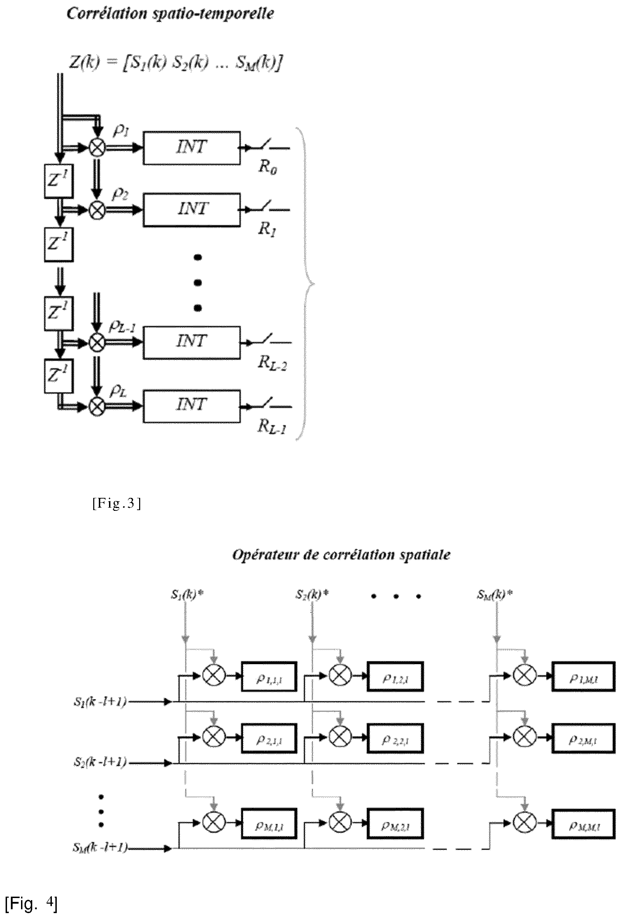

où S* est le conjugué de S, $\rho$ est le produit du signal S(t) avec une version décalée du signal comme illustré plus après en relation avec les figures 3 et 4, m et n correspondent à des capteurs (entre 1 et M), l est un retard du signal (entre 0 et L-1), Te est la fréquence échantillonnage de numérisation du signal S, k est l'indice d'instant d'échantillonnage, $T_W$ est la période de rafraîchissement des coefficients W, i est un indice de l'intervalle de renouvellement des coefficients W.
La figure 3 illustre un mode de réalisation particulier dans lequel les M signaux issus des capteurs fournis en entrée du sous-bloc secondaire 41, échantillonnés à la fréquence Fe, sont représentés par le vecteur Z(k), de dimension M, avec :

[Math8]

$$Z(k) = [S_1(k), \ldots, S_m(k), \ldots, S_M(k)]$$

Le vecteur de signaux Z(k) est fourni à l'entrée du sous-bloc 42 d'intercorrélation. Dans le sous-bloc 42 d'intercorrélation, le vecteur de signaux Z(k) est fourni à une ligne à retard comprenant L-1 éléments $Z^{-1}$ disposés en série. Le vecteur de signaux Z(k-l) résultant de chaque l retard unitaire (l variant entre 0 et L-1) est fourni en entrée d'un ensemble de multiplicateurs complexe dans lequel chacune de ses coordonnées complexe $S_m(k-l)$ (m variant entre 1 et M), est multipliée par le conjugué de chaque coordonnée complexe $S_n(k)$ de Z(k), où m et n correspondent à des capteurs et sont compris entre 1 et M. Le résultat de ces multiplications est une matrice $\rho_l$ de taille MxM dont les éléments $\rho_{n,m,l}$ sont obtenus par la formule suivante :

[Math9]

$$\rho_{n,m,l}(k.Te) = S_m(k-l) \times S_n(k)^*$$

Avec n et m compris entre 1 et M.
La figure 4 illustre plus en détail l'opérateur de corrélation spatiale permettant l'obtention des termes $\rho_{n,m,l}$ de la matrice $\rho_l$.
En référence à la figure 3, dans le sous-bloc 42 d'intercorrélation, la matrice $\rho_l$ ainsi définie est délivrée à un intégrateur INT qui est adapté pour réaliser sur chaque terme de la matrice une intégration sur un intervalle de temps de durée Tw. L'intégrateur délivre ainsi le résultat de l'intégration de la matrice $\rho_l$ qui permet d'obtenir la matrice $[R_l]$, sous-élément de la matrice d'intercorrélation $R_{xx}$ par la formule suivante :

[Math10]

$$[R_l] = \int_{(i-1)T_W}^{iT_W} \rho_l(t)dt$$

A partir de la matrice $R_{xx}$, on calcule ensuite les coefficients de pondération $W_{m,l}$ à la fin de chaque période de rafraîchissement $T_W$.
Le sous-bloc 43 de calcul des coefficients de pondération est adapté pour calculer les coefficients de pondération actualisés $W_{m,l}$ en fonction de la matrice $R_{xx}$ actualisée et fournir ces coefficients de pondérations au bloc principal 40.
Dans un mode de réalisation, la méthode de Capon est utilisée pour déterminer les coefficients de pondération W sur la base de l'équation suivante :

[Math11]

$$W = \frac{R_{xx}^{-1}C}{C^T R_{xx}^{-1} C}$$

Où C est le vecteur contrainte et W est le vecteur des coefficients de pondération, ce dernier pouvant être exprimé sous forme de vecteur de la manière suivante :

[Math12]

$$W = [W_1 \quad W_2 \quad \dots \quad W_m \quad \dots \quad W_M]$$

Et où $W_m$ peut également être exprimé sous forme de vecteur de la manière suivante :

[Math13]

$$W_m = [W_{m,0} \quad W_{m,1} \quad \dots \quad W_{m,l} \quad \dots \quad W_{m,L-1}]$$

Le vecteur contrainte C est un vecteur déterminé pour chaque satellite (il est déterminé de manière à conserver la puissance des signaux utiles en provenance des satellites). Il peut s'exprimer par le produit de Kronecker suivant :

[Math14]

$$C = C_{temporel} \otimes C_{spatial}$$

[Math15]

$$C_{temporel} = \begin{bmatrix} ct_1 \\ \vdots \\ ct_{(L-1)/2} \\ \vdots \\ ct_L \end{bmatrix}_{L \times 1}$$

[Math16]

$$C_{spatial} = \begin{bmatrix} cs_1 \\ \vdots \\ cs_M \end{bmatrix}_{M \times 1}$$

[Math17]

$$C = \begin{bmatrix} \begin{bmatrix} ct_1 . cs_1 \\ \vdots \\ ct_1 . cs_M \end{bmatrix} \\ \vdots \\ \begin{bmatrix} ct_L . cs_1 \\ \vdots \\ ct_L . cs_M \end{bmatrix} \end{bmatrix}_{L.M \times 1}$$

Les coefficients du vecteur contrainte temporel $C_{temporel}$ peuvent être obtenus à partir de la fonction de transfert $H_{F_{RF}}$ du filtre analogique $F_{RF}$, soit :

[Math18]

$$ct_l = \int_{-Fe/2}^{+Fe/2} H_{F_{RF}}(f) . e^{-(2j\pi.(l-l_0).T_e.f)} . df$$

où $l_0$ est égal à (L+1)/2 et où f est la fréquence.

Il n'est pas nécessaire d'avoir une modélisation fine de la fonction de transfert des filtres analogiques $F_{RFm}$. Un gabarit valant 1 ou 0 selon que l'on est dans la bande passante du filtre ou pas est suffisant : $H_{filtre\ RF}(f)$ est égal à 1 si f appartient à la bande passante du filtre, H filtre RF(f) est égal à 0 sinon.

Les coefficients du vecteur contrainte spatial $C_{spatial}$ sont obtenus à partir des déphasages $\theta_m$ entre les capteurs pour la direction satellite choisie, soit :

[Math19]

$$C_{spatial} = \begin{bmatrix} \exp(j\,\theta_1) \\ \vdots \\ \exp(j\,\theta_M) \end{bmatrix}_{M \times 1}$$

On notera que lorsque l'antenne n'a qu'un seul capteur (M est égal à 1), le traitement STAP selon l'invention se réduit à un traitement TAP (Temporal Adaptive Processing). Toutes les formules données plus avant sont donc les mêmes, avec M égal à 1. En particulier dans ce cas, le vecteur contrainte spatiale $C_{spatial}$ est égal à 1 et ainsi le vecteur contrainte C est égal au vecteur contrainte temporel $C_{temporel}$.

Le signal résultant du traitement antibrouillage $S_{stap}(k)$ est délivré en sortie du bloc principal 40 et est fourni en entrée du module 5 de détermination de la localisation du récepteur.

Le module 5 de détermination de la localisation du récepteur comporte généralement plusieurs canaux de traitement $CAL_s$, s = 1 à S, un canal correspondant à un satellite. Chaque canal de traitement $CAL_i$ est adapté pour démoduler le signal émis par le satellite $SAT_s$ à l'aide d'une boucle PLL ou FLL et d'une boucle DLL. Le décalage temporel entre le signal émis par le satellite $SAT_s$ à une date à déterminer et ce signal reçu par le récepteur à une date connue correspond à la durée recherchée de propagation du signal. Dans chaque canal $CAL_s$, une réplique du code d'étalement émis est générée localement. Une mise en phase entre le signal reçu et le signal local est réalisée. Le critère de mise en phase correspond à la maximisation de la corrélation des deux signaux, des hypothèses de décalage différentes étant considérées pour chaque calcul de corrélation.

Le module 5 est en outre adapté pour déterminer la localisation du récepteur 1 en fonction des durées de propagations des signaux déterminées pour les différents satellites, par triangulation.

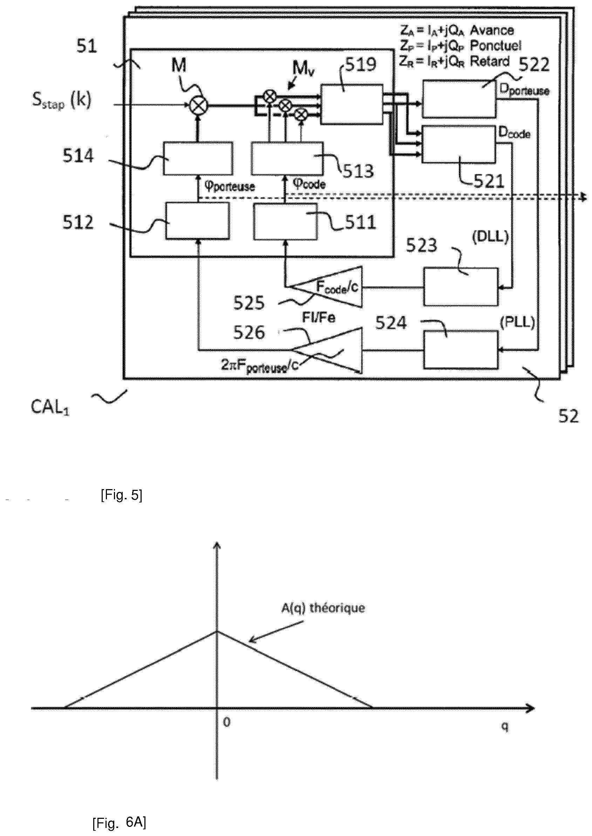

Ces opérations sont illustrées succinctement en figure 5 qui illustre un canal de traitement $CAL_1$. Dans le mode de réalisation illustré, le canal de traitement $CAL_1$ comprend un module matériel 51 et un module logiciel 52.

Le module matériel 51 reçoit le signal complexe $S_{stap}(k)$ délivré en sortie du bloc principal 40. Il est configuré pour générer le code local et la porteuse locale, générant des signaux locaux, et pour les corréler ensuite avec le signal qu'il reçoit. Il peut être cadencé à une fréquence relativement élevée, de quelques MHz, par exemple de l'ordre de 50 MHz.

Le module matériel 51 comprend un intégrateur numérique de phase de porteuse locale 512 générant à partir d'un premier signal de commande approprié une phase de la porteuse locale $\varphi_{porteuse\_local}$ permettant la génération d'une porteuse locale complexe à partir d'un générateur de porteuse 514. Le module matériel 51 permet en premier lieu une démodulation de la porteuse, par une multiplication du signal numérisé par la porteuse locale complexe, au moyen d'un multiplicateur M.

Le module matériel 51 comprend également un intégrateur numérique de phase de code 511 générant à partir d'un deuxième signal de commande approprié une phase de code local $\varphi_{code\_local}$ permettant la génération d'un code d'étalement local propre au satellite auquel le canal considéré est dédié à partir d'un générateur de codes locaux 513. Le module matériel 51 permet en second lieu une démodulation du code, par une multiplication du signal démodulé en porteuse issu du multiplicateur M précité par un code local géré par le générateur de codes locaux 513.

Le générateur de codes locaux 513 peut générer une pluralité de codes locaux : le code local dit « ponctuel », ainsi qu'un ou plusieurs codes locaux avancés et/ou retardés par rapport au code local ponctuel. Dans l'exemple illustré par la figure 5, le générateur de codes locaux 513 génère un code local ponctuel, un code local dit « retard », correspondant au code local ponctuel retardé d'un délai d par exemple égal à 0,5 chip, et un code local dit « avance », correspondant au code local ponctuel avancé du délai d. Ainsi, la démodulation du code évoquée précédemment peut être réalisée en parallèle sur différentes voies correspondant aux différents codes locaux générés, au moyen d'une pluralité de multiplicateurs de corrélation Mv disposés en parallèle.

Les signaux complexes en sortie des multiplicateurs de corrélation Mv peuvent alors être intégrés de manière cohérente par un intégrateur de corrélation 519, produisant des échantillons de signaux numérisés formant les voies de corrélation. Dans l'exemple illustré par la figure 5, trois voies de corrélation sont ainsi issues de l'intégrateur de corrélation 519 : une voie ponctuelle, une voie retard et une voie avance, formalisables par des signaux complexes, respectivement : $Z_P$, $Z_R$ et $Z_A$.

Ces signaux complexes de corrélation peuvent alors être exploités par le module logiciel 52. Ainsi, l'intégrateur de corrélation 519 peut être cadencé à une fréquence plus basse, correspondant à la fréquence de travail du module logiciel 52, typiquement de l'ordre de quelques dizaines de Hz, par exemple 50Hz. La période correspondante est nommée période de boucle $T_{boucle}$. De la sorte, l'intégrateur de corrélation 519 réalise une intégration toutes les 20 ms ($T_{boucle}$).

Le module logiciel 52 permet de générer les signaux de commande de l'intégrateur numérique de phase de porteuse locale 512 et de l'intégrateur numérique de phase de code 511, respectivement via l'asservissement d'une boucle de code DLL et d'une boucle de phase de porteuse PLL, de manière à ce que la porteuse locale soit en phase avec la porteuse reçue, et à ce que le code local de la voie ponctuelle soit en phase avec le code reçu.

La boucle de code DLL comprend un discriminateur de code 521 recevant en entrée les différents signaux complexes issus des voies de corrélation formées par les sorties de l'intégrateur de corrélation 519, et restituant en sortie un signal $D_{code}$ représentatif de la différence $\tau$ entre la phase du code reçu $\varphi_{code\_reçu}$ et la phase du code local $\varphi_{code\_local}$. Ledit signal $D_{code}$ est fourni à un correcteur de code 523, ce dernier générant des commandes de code en vitesse, à la fréquence de travail du module logiciel 52, c'est-à-dire par exemple toutes les 20 ms. Les commandes de code en vitesse sont appliquées à l'entrée d'un amplificateur de commandes de code 525 restituant les deuxièmes signaux de commande en terme de nombre de chips par période d'échantillonnage à l'attention de l'intégrateur numérique de phase de code 511.

D'une manière similaire, la boucle de phase de porteuse PLL comprend un discriminateur de porteuse 522 recevant en entrée le signal issu de la voie de corrélation ponctuelle formée par la sortie correspondante de l'intégrateur de corrélation 519, et restituant en sortie un signal $D_{porteuse}$ représentatif de la différence de phase $\Delta\varphi$ entre la phase de porteuse du signal reçu $\varphi_{porteuse\_reçu}$ et la phase de porteuse locale $\varphi_{porteuse\_locale}$. Ledit signal $D_{porteuse}$ est fourni à un correcteur de porteuse 524, ce dernier générant des commandes de porteuse en vitesse, à la fréquence de travail du module logiciel 52. Les commandes de porteuse en vitesse sont appliquées à l'entrée d'un amplificateur de commandes de porteuse 526 restituant les premiers signaux de commande en terme de cycles par période d'échantillonnage à l'attention de l'intégrateur numérique de phase de porteuse locale 512.

Le récepteur 1 comprend également une première fonction permettant de mettre en oeuvre une première phase de détermination d'un risque de faux accrochage du procédé selon l'invention.

On a vu que les calculs de corrélation sont réalisés sur la période $T_{boucle}$ des boucles de code et de porteuse et sur la base du signal $S_{stap}(k)$ délivré en sortie du bloc principal 40, qui du fait de son traitement au niveau du filtre anti-interférence, est renouvelé toutes les périodes de rafraîchissement $T_W$ des coefficients W du filtre. Ainsi, à chaque période de rafraîchissement $T_W$ le changement des coefficients W du filtre est susceptible de changer les caractéristiques fréquentielles du signal $S_{stap}(k)$. Ces changements ont lieu à une fréquence beaucoup plus rapide que le temps de réponse des boucles de poursuite, ou période des boucles ($T_{boucle}$). Pour donner un ordre de grandeur, la période de rafraîchissement $T_W$ peut varier entre 1 microseconde (1MHz) et 1 milliseconde (1kHz) alors que la période $T_{boucle}$ des boucles de poursuite peut varier entre 1 milliseconde (1kHz) et 200 millisecondes (5Hz).

Selon le mode de réalisation présenté, la première phase de détermination d'un risque de faux accrochage du procédé comprend une première étape de détermination du filtre moyen sur une période d'intégration $T_{moyen}$.

La première fonction peut comprendre une première sous-fonction 44 adaptée pour mettre en oeuvre la première étape de détermination du filtre moyen sur une période d'intégration $T_{moyen}$.

La période d'intégration $T_{moyen}$ est égale à la période sur laquelle les filtres sont moyennés. La période d'intégration est définie par rapport à la période de boucle $T_{boucle}$, voire est sensiblement égale à la période de boucle $T_{boucle}$. La période d'intégration $T_{moyen}$ peut être confondue avec la période de boucle $T_{boucle}$ ou les deux périodes peuvent avoir des valeurs différentes.

La période d'intégration $T_{moyen}$ peut varier typiquement entre 1 et 200 millisecondes, par exemple être égale à 20 millisecondes.

Dans le mode illustré en figure 1, la deuxième sous-fonction 44 (ou sous-fonction de moyennisation) est mise en oeuvre dans le module 4 de traitement anti-interférence et plus précisément dans le bloc secondaire 41 dudit module. La deuxième sous-fonction 44 est couplée au sous-bloc 43 de calcul des coefficients de pondération de manière à recevoir en entrée les coefficients W (et donc pouvoir les moyenner).

La première étape de détermination du filtre moyen peut comprendre la détermination de la fonction de transfert moyenne du filtre anti-interférence. Le calcul est facilité en partant de la réponse impulsionnelle du filtre.

Dans le cas d'un filtre numérique de type FIR, à réponse impulsionnelle finie, les coefficients W donnent directement la réponse impulsionnelle RI. Il suffit de calculer la moyenne des coefficients sur la période d'intégration $T_{moyen}$ pour obtenir la réponse impulsionnelle moyenne. Les coefficients moyens peuvent être déterminés à l'aide de la formule suivante :

[Math20]

$$W_{moyen} = \sum_{u=1}^{\frac{T_{moyen}}{T_W}} W(u)$$

La réponse impulsionnelle moyenne $RI_{moyen}$ est donnée par :

[Math21]

$$RI_{moyen} = W_{moyen}$$

Dans le cas d'un filtre numérique de type IIR, à réponse impulsionnelle infinie, il est nécessaire de calculer la réponse impulsionnelle pour chaque jeu de coefficients du filtre (numérateur N et dénominateur D), puis d'en faire la moyenne, soit

[Math22]

$$S_{sortie}(k) = \sum_{l=0}^{L_n-1} N_l . S_{entrée}(k-l) - \sum_{l=0}^{L_d-1} D_l . S_{sortie}(k-l)$$

[Math 23]

$$N = \begin{bmatrix} N_0 \ N_1 \ N_2 \dots N_{L_n} \end{bmatrix}$$

[Math 24]

$$D = \begin{bmatrix} D_0 \ D_1 \ D_2 \dots D_{L_d} \end{bmatrix}$$

On calcule la réponse impulsionnelle moyenne RI$_{moyen}$ à partir de la réponse impulsionnelle instantanée RI(u) (et non plus à partir des coefficients W), soit :

[Math25]

$$RI_{moyen} = \sum_{u=1}^{\frac{T_{moyen}}{T_W}} RI(u)$$

Pour calculer S(k) on utilise l'équation du filtre, avec en entrée :

[Math26]

$$S_{entrée} = [1\ 0\ ...\ 0\ 0]$$

Et pour conditions initiales :

[Math27]

$$S_{sortie}(q) = 0 \ pour \ q < 0$$

On obtient ainsi :

[Math28]

$$RI = [S_0\ S_1\ ...\ S_l\ ...\ S_L]$$

Avec

[Math29]

$$S_l = S_{sortie}(l)$$

La longueur L dépend du choix des coefficients N et D, on arrête le calcul lorsque la valeur de S$_l$ devient négligeable ou si on atteint une valeur limite L$_{max}$ fixée à l'avance.

Il est à noter que dans le cas d'un filtre anti-interférence STAP, si on considère un vecteur contrainte spatiale différent pour chaque satellite poursuivi SAT$_s$, dépendant de la direction d'arrivée du signal, il faut de préférence calculer une fonction de transfert moyenne (ou réponse impulsionnelle moyenne) pour chaque direction spatiale utilisée. On aura donc une réponse impulsionnelle moyenne par satellite SAT$_s$ qui est donnée par :

[Math 30]

$$RI_{moyen\ sat_s} = W_{moyen\ sat_s} = \sum_{m=1}^{M} C_{spatial\ sat_s,m} . W_{moyen\ sat_s,m}$$

$$= \sum_{m=1}^{M} e^{-j\theta_{sat_s,m}} . W_{moyen\ sat_s,m}$$

Où M est le nombre de capteurs et m l'indice de capteur.

On calcule la réponse impulsionnelle moyenne pour le filtre de chaque voie m de capteur, indépendamment du satellite, par la formule suivante :

[Math31]

$$W_{moyen,m} = \sum_{u=1}^{\frac{T_{moyen}}{T_W}} W_m(u)$$

Dans le cas où on a un seul vecteur contrainte spatiale, on n'a qu'une réponse impulsionnelle valable pour tous les satellites. Par simplification dans la suite de la description, on considère ce cas, et la réponse impulsionnelle moyenne est désignée $RI_{moyen}$.

La première phase de détermination d'un risque de faux accrochage du procédé comprend une deuxième étape de calcul de la fonction d'auto-corrélation théorique moyenne sur une période d'intégration.

La première fonction peut comprendre une deuxième sous-fonction 53 adaptée pour mettre en oeuvre la deuxième étape de calcul de la fonction d'auto-corrélation théorique moyenne.

Dans le mode illustré en figure 1, la deuxième sous-fonction 53 est mise en oeuvre dans le module 5 de détermination de la localisation du récepteur, en amont des canaux satellites $CAL_s$ et elle donne une sortie utilisable par tous les canaux. Ainsi la deuxième sous-fonction 53 reçoit la moyenne des réponses impulsionnelles $RI_{moyen}$ de la première sous-fonction 44.

Selon le mode de réalisation présenté, la deuxième étape comprend une opération de convolution entre une fonction d'auto-corrélation théorique nominale $A_0$ et la réponse impulsionnelle moyenne $RI_{moyen}$ du filtre anti-interférence, de manière à en déduire la fonction d'auto-corrélation théorique moyenne A soit :

[Math32]

$$A = A_0 * RI_{moyen}$$

où $*$ est l'opération de convolution

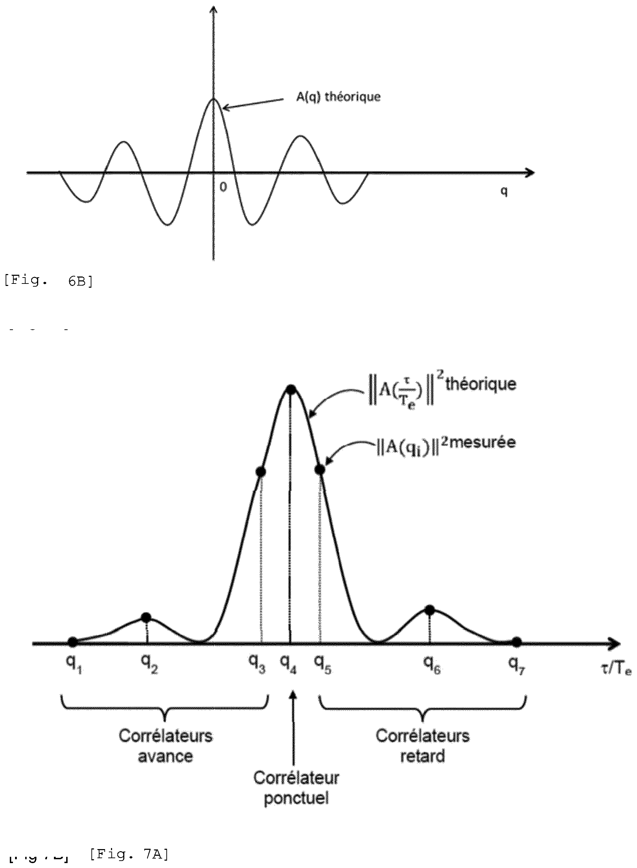

Une fonction d'auto-corrélation théorique nominale $A_0$ est par exemple une fonction d'autocorrélation d'une module BPSK (ou fonction triangle) comme représentée en figure 6A ou une fonction d'autocorrélation d'une modulation BOC comme représentée en figure 6B.

On obtient une fonction d'auto-corrélation théorique moyenne A fonction du temps, où le temps est une série discrète de valeurs q, soit :

[Math33]

$$A(q) = \sum_{l=0}^{L_a+L-1} A_0(q).RI_{moyen}(l-q)$$

Où L est le nombre de retards utilisés dans le filtre linéaire, et $L_a$ est la longueur du support de la fonction d'auto-corrélation théorique nominale, c'est à dire sans filtrage. Le support de la fonction d'autocorrélation désigne l'intervalle de son argument $\tau$ pour lequel ses valeurs peuvent être considérées comme non nulles. L'argument $\tau$ de la fonction d'autocorrélation correspond à la différence entre la phase du code reçu et la phase du code local. Les valeurs discrètes q correspondent à des valeurs discrètes comprises entre 0 et $L_a+L-1$.

Le support $L_a$ de la fonction de corrélation nominale peut être un intervalle compris entre -1,5 et +1,5 Chip ($T_c$) ou entre -1 et +1 Chip. De manière plus générale, la valeur de $L_a$ sera déterminée en fonction de la précision souhaitée pour le procédé selon l'invention.

La fonction de corrélation théorique nominale $A_0$ est sous forme de vecteur de longueur $L_a$ :

[Math34]

$$A_0 = [A_0(0) \quad A_0(1) \ldots \quad A_0(I) \quad \ldots \quad A_0(L_a\text{-}1)]$$

La réponse impulsionnelle moyenne du filtre est sous forme de vecteur de longueur L :

[Math35]

$$RI_{moyen} = [RI_{moyen}(0) \quad RI_{moyen}(1) \quad \ldots \quad RI_{moyen}(I) \quad \ldots \quad RI_{moyen}(L\text{-}1)]$$

La fonction de corrélation théorique nominale A obtenue par la formule Math33 est sous forme de vecteur de longueur L + $L_a$ -1 :

[Math36]

$$A = [A(0) \quad A(1) \quad \ldots \quad A(I) \quad \ldots \quad A(L_a\text{+}L\text{-}1)]$$

La première phase comprend une troisième étape de détermination d'un nombre de pics (ou maximum locaux) de la fonction d'auto-corrélation théorique moyenne A sur la longueur L + $L_a$ -1.

La présence de pics multiples de la fonction d'auto-corrélation théorique moyenne A pour lesquels les maximums présentent une valeur d'atténuation par rapport au maximum du pic principal (i.e. un ratio pic secondaire sur pic principal) compatibles avec le seuil de poursuite (i.e. la valeur minimale d'un pic pour qu'il soit visible par une boucle de poursuite), renseigne en effet sur le risque de faux accrochage.

Dans le mode illustré en figure 1, cette troisième étape est également réalisée dans la deuxième sous-fonction 53.

Pour déterminer le nombre de pics, une solution est de rechercher les zéros de la dérivée du module au carré de la fonction d'auto-corrélation théorique moyenne A, c'est-à-dire rechercher le (ou les) zéro(s) de la fonction dérivée suivante :

[Math37]

$$(\|A(t + dt)\|^2 - \|A(t - dt)\|^2)/dt$$
$$= Re\big[\big(A(t + dt) - A(t - dt)\big).\big(A(t + dt) + A(t - dt)\big)^*\big]/dt$$

Où Re représente la partie réelle et * le conjugué de la fonction.

La variable t étant un nombre entier (q), dt ne peut pas être plus petit que 1 et la fonction dérivée équivaut à la fonction Delta(q) suivante dont on va rechercher les zéros :

[Math 38]

$$Delta(q) = Re\big[\big(A(q + 1) - A(q - 1)\big).\big(A(q + 1) + A(q - 1)\big)^*\big]$$

On peut l'assimiler à la fonction Delta(q) suivante :

[Math39]

$$Delta(q) = Re\big[\big(A(q + 1) - A(q - 1)\big).\big(2.A(q)\big)^*\big]$$

Les pics recherchés correspondant à une « dérivée » nulle et une « dérivée seconde » négative sont obtenus en recherchant les valeurs nulles de la fonction Delta autour desquelles les pentes sont négatives.

Si on trouve au moins deux pics i.e. un pic principal et au moins un pic secondaire de la fonction d'auto-corrélation théorique moyenne A, alors il y a un risque de faux accrochage. De préférence, une alarme est déclenchée car il y a un risque que pour une raison ou une autre un des canaux de traitement satellite s'accroche sur un pic secondaire.

De préférence, on ne retient que le ou les zéro(s) à pente négative de la fonction Delta pour lesquels la valeur de module au carré de la fonction d'auto-corrélation A est au-dessus d'un premier seuil S1 susceptible de permettre un accrochage stable des boucles de code et de porteuse du canal satellite.

De préférence, le premier seuil minimal S1 dépend de l'écart x en échelle logarithmique entre le rapport signal sur bruit C/N0 maximum que l'on peut recevoir des satellites et le seuil de poursuite exprimé en dBHz, lié au seuil de sensibilité du récepteur. Ainsi le premier seuil S1 peut être exprimé sous la forme :

[Math40]

$$S1 = \frac{\max(\|\max(A_0)\|^2)}{10^{\frac{x}{10}}}$$

Par exemple, pour un rapport signal sur bruit de 50 dB et un seuil de poursuite à 30 dB, l'écart x est de 20 dB. Le dénominateur de la fonction Math40 est égal à 100. Ainsi, pour que le pic secondaire soit pris en compte, il faut que le module au carré de la valeur de la fonction A en ce pic soit au moins égal au centième du module au carré de la fonction d'auto-corrélation nominale $A_0$.

Le premier seuil S1 peut être modulé en considérant non pas le C/N0 maximal théorique mais le C/N0 maximal mesuré sur les satellites supposés bien accrochés.

Si on trouve au moins deux pics, i.e. un pic principal et au moins un pic secondaire, de la fonction d'auto-corrélation théorique moyenne A au-dessus de ce premier seuil S1 alors il y a un risque de faux accrochage. De préférence, une alarme est déclenchée car il y a un risque que pour une raison ou une autre un des canaux de traitement satellite s'accroche sur un pic secondaire.

Selon un mode de réalisation, le procédé selon l'invention comprend une deuxième phase de détection d'un faux accrochage.

Si lors de la première phase, un risque de faux accrochage a été détecté alors on peut vérifier si un canal satellite est effectivement mal accroché, i.e. s'il est réellement accroché sur un pic secondaire. Cette deuxième phase est réalisée de préférence pour chaque canal de traitement pour lequel un risque de faux accrochage a été détecté lors de la première phase.

Le récepteur peut ainsi comprendre une deuxième fonction $54_s$ apte à mettre en oeuvre la deuxième phase de détection d'un faux accrochage. Une deuxième fonction est mise en oeuvre au niveau d'un canal satellite ou en sortie d'un canal satellite. Il y a autant de deuxièmes fonctions $54_s$ que de canaux satellites (s varie entre 1 et S).

Pour rappel, pour fermer les boucles de poursuite, un générateur de codes locaux génère a minima un code local ponctuel, un code local retard et un code local avance, voire uniquement un code ponctuel et un code retard ou avance. Ces différents codes sont multipliés au signal démodulé en porteuse sur différentes voies (voie ponctuelle, voie retard et/ou voie avance) grâce à une pluralité de multiplicateurs de corrélation disposés en parallèle. Les signaux en sortie des multiplicateurs de corrélation peuvent alors être intégrés par un intégrateur de corrélation, produisant des échantillons de signaux numérisés formant les voies de corrélation.

La deuxième phase comprend une première étape de calcul de vraisemblance entre la fonction d'auto-corrélation théorique moyenne et la fonction d'auto-corrélation mesurée dans les voies de corrélation.

Ladite première étape nécessite l'utilisation de plusieurs voies de corrélation, a minima les voies avance, ponctuelle et/ou retard généralement déjà existantes car utiles pour la poursuite de la phase du code, auxquelles peuvent s'ajouter des voies de corrélation supplémentaires. Le principe est de calculer la vraisemblance entre la fonction d'auto-corrélation théorique moyenne et la fonction d'auto-corrélation mesurée dans les voies de corrélation.

Les voies de corrélation comprenant chacune un corrélateur, elles pourront être nommées par la suite « corrélateurs » par raccourci.

Il est à noter que des voies de corrélation additionnelles peuvent être déjà disponibles dans certains types de récepteurs, utilisant des multi-corrélateurs aux fins d'accélérer les phases d'acquisition. Il est donc avantageux d'exploiter de telles voies de corrélation déjà existantes.

Pour calculer la vraisemblance entre la fonction d'auto-corrélation théorique moyenne et la fonction d'auto-corrélation mesurée dans les voies de corrélation, on peut déterminer les valeurs des fonctions d'auto-corrélation théorique et mesurées aux différentes positions $q_i$ des corrélateurs. Une position correspond à un décalage du code local du corrélateur par rapport au code ponctuel. Cela peut être une unité temporelle, comme la période d'échantillonnage Te, ou un chip. On peut ensuite calculer un critère nominal de vraisemblance Critère0 par produit scalaire normalisé comparé à 1 suivant la formule :

[Math41]

$$Critère0 = \frac{\left(\sum_{i=1}^{NC} A(q_i).A_{mes}(q_i)\right)^2}{\left(\sum_{i=0}^{NC} \|A(q_i)\|^2\right)\left(\sum_{i=0}^{NC} \|A_{mes}(q_i)\|^2\right)}$$

Où $A_{mes}(q_i)$ est la sortie du corrélateur n°i moyennée sur la période d'intégration $T_{moyen}$, $q_i$ est la position du corrélateur n°i (par exemple : $q_A$, $q_P$, $q_R$ qui sont les positions des corrélateurs avance, ponctuel et retard) et NC le nombre de corrélateurs utilisés dans le calcul.

Le nombre NC de corrélateurs comprend a minima les corrélateurs avance, ponctuel et/ou retard nécessaires à la poursuite des boucles.

Les valeurs $q_i$ correspondant aux positions des corrélateurs ne sont pas nécessairement des entiers, ou ne sont pas nécessairement implémentées de 1 en 1, ou encore ne sont pas nécessairement espacées de manière régulière, contrairement aux positions q utilisées pour le calcul de la fonction d'auto-corrélation théorique moyenne A. Ainsi, elles ne coïncident pas nécessairement avec les positions q entières utilisées pour le calcul de A par la formule Math33. Si les valeurs $q_i$ ne sont pas entières ou ne sont pas implantées de 1 en 1 ou de manière régulière, on peut utiliser par exemple une interpolation polynomiale.

La deuxième phase comprend une seconde étape de comparaison du résultat du calcul de vraisemblance avec un deuxième seuil S2.

Par exemple, le critère nominal de vraisemblance Critère0 peut être comparé avec un deuxième seuil S2. S'il est supérieur ou égal au deuxième seuil S2 alors on estime que la fonction d'auto-corrélation théorique moyenne A est bien centrée sur la voie ponctuelle et que le canal satellite est bien accroché.

Si le critère nominal de vraisemblance est inférieur au deuxième seuil S2, alors on estime que le canal satellite est mal accroché. De préférence, une alarme est déclenchée. De préférence, on enclenche une troisième phase de recherche de pic principal, soit en relançant le canal en recherche de pic de corrélation (ce qui induit une perte de temps de mesure correspondant au temps pour retrouver le pic et fermer les boucles, sans compter le temps pour une nouvelle détection de risque de faux-accrochage), soit en recherchant directement le pic d'accrochage principal par translation sur les voies de corrélation (moins de perte de temps de mesure) comme décrit plus après.

La valeur du deuxième seuil S2 est de préférence déterminée de manière à trouver le meilleur compromis entre la probabilité de fausse alarme (si sa valeur est trop grande) et la probabilité de non-détection (si sa valeur est trop petite). Une fausse alarme peut conduire à une discontinuité de service si on ne sait pas détecter la position du pic principal. Une non détection peut conduire à une mesure erronée non signalée, donc une non intégrité.

Le deuxième seuil S2 peut être compris entre 0,7 et 0,9, par exemple être égal à 0,8.

Pour éviter les fausses alarmes dues au bruit sur les mesures $A_{mes}(q_i)$, il est avantageux d'utiliser une durée de calcul de la moyenne de la période d'intégration $T_{moyen}$ suffisamment longue.

Selon un mode de réalisation, le procédé selon l'invention comprend une troisième phase de recherche du pic principal.

Le récepteur peut ainsi comprendre une troisième fonction $55_s$ apte à mettre en oeuvre la troisième phase de recherche du pic principal. Une troisième fonction est mise en oeuvre au niveau d'un canal satellite. Il y a autant de troisièmes fonctions $55_s$ que de canaux satellite (s varie entre 1 et S).

Selon un mode particulier, la troisième phase de recherche du pic principal repose sur une translation de la fonction de corrélation théorique moyenne A jusqu'à ce qu'elle corresponde à la fonction d'auto-corrélation mesurée $A_{mes}$ ou du moins qu'elle s'en approche selon un seuil de vraisemblance donné. Ladite troisième phase nécessite l'utilisation de plusieurs voies de corrélation, a minima les voies avance, ponctuelle et/ou retard, auxquelles peuvent s'ajouter des voies de corrélation supplémentaires, comme explicité pour la deuxième phase.

On teste plusieurs hypothèses de faux accrochage, chaque hypothèse correspondant à un pic i.e. à un zéro de la fonction Delta (obtenue pour une valeur $d_j$), et on calcule la vraisemblance entre la fonction d'auto-corrélation théorique $A(q_i+d_j)$ translatée de cette valeur $d_j$ par rapport à la fonction d'auto-corrélation mesurée $A_{mes}(q_i)$ aux positions $q_i$ des corrélateurs.

On peut tester en même temps plusieurs hypothèses de faux accrochage.

Pour calculer la vraisemblance entre la fonction d'auto-corrélation théorique moyenne translatée et la fonction d'auto-corrélation mesurée, on peut déterminer les valeurs de la fonction d'auto-corrélation théorique pour des positions décalées de $d_j$ par rapport aux différentes positions temporelles $q_i$ des corrélateurs et les valeurs de la fonction d'auto-corrélation mesurées pour des positions égales aux différentes positions temporelles $q_i$ des corrélateurs. On peut ensuite calculer un j-ème critère de vraisemblance Critère j par produit scalaire normalisé comparé à 1 suivant la formule :

[Math42]

$$Critère\ j = \frac{\left(\sum_{i=1}^{NC} A(q_i + d_i).A_{mes}(q_i)\right)^2}{\left(\sum_{i=0}^{NC}\|A(q_i + d_i)\|^2\right)\left(\sum_{i=0}^{NC}\|A_{mes}(q_i)\|^2\right)}$$

Où $d_j$ correspond à un zéro de la fonction Delta, ou à un zéro de la fonction Delta tel que la valeur du module au carré de la fonction de corrélation théorique moyenne A est supérieure ou égale au premier seuil S1 comme explicité dans la description de la première phase du procédé selon l'invention.

On retient la valeur de $d_j$ donnant la plus grande valeur de critère. Si la plus grande valeur de critère dépasse un troisième seuil S3, par exemple égal à 0.9, on effectue un saut de code local de $d_j$.Te (pour rappel, Te est la période d'échantillonnage) dans le canal satellite et on vérifie après convergence des boucles que la nouvelle valeur de critère calculée est toujours supérieure à un quatrième seuil S4 par exemple égal à 0.95.

La valeur du troisième seuil S3 est choisie assez proche de 1 pour éviter de détecter un faux maximum local, avec un peu de marge pour tenir compte des bruits en sortie des corrélateurs et éviter de rejeter le bon maximum local.

La valeur du quatrième seuil S4 est choisie supérieure à la valeur du troisième seuil S3 afin de confirmer l'accrochage sur le bon pic, sachant qu'après le saut de code local, on devrait retrouver un critère de vraisemblance amélioré.

Si la plus grande valeur de critère est en dessous du troisième seuil de S3 ou S4, alors on maintient l'alarme et on relance le canal en recherche de pic de corrélation.

La figure 7A représente deux fonctions d'auto-corrélation théorique et mesurée qui sont confondues, illustrant un bon accrochage : le pic de corrélation mesuré au niveau du corrélateur ponctuel est bien le pic principal de la fonction d'auto-corrélation théorique.

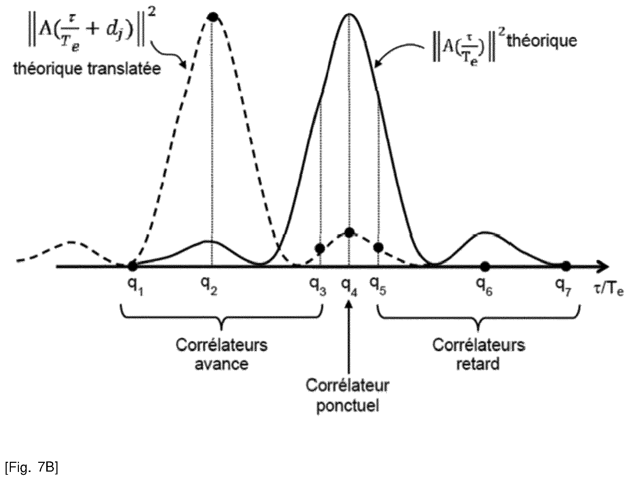

La figure 7B illustre deux fonctions d'auto-corrélation théorique (en trait plein) et théorique décalée (en pointillés), le décalage illustrant un faux accrochage du canal satellite : le pic de corrélation mesuré au niveau du corrélateur ponctuel n'est pas le pic principal de la fonction d'auto-corrélation. Le code local du corrélateur ponctuel est en avance d'une valeur de $d_j$ égale à $q_4$ moins $q_2$ par rapport au code reçu. Pour retrouver le bon pic, il faut effectuer un saut de code local de $-d_j$.Te soit de

[Math44]

$$- d_j.Te = - (q_4 - q_2).Te$$

Sauf indication contraire, les différents modes de réalisation peuvent être combinés entre eux.

En outre, il faut comprendre que d'autres modes de réalisation peuvent être utilisés et notamment que des modifications logiques peuvent être effectuées. En outre, les modes de réalisations présentés dans la description détaillée de l'invention ne doivent pas être interprétés comme limitant l'ordre des étapes et sous-étapes.

L'invention s'applique pour tout type de récepteur de signaux de radionavigation par satellite ou pseudolite.

Le récepteur intégrant une fonction de contrôle d'intégrité selon l'invention peut comprendre des moyens logiciels ou matériels ou une combinaison de moyens logiciels et matériels. Les première, deuxième(s) et troisième(s) fonctions, les première et deuxième sous-fonctions (plus généralement les fonctions et sous-fonctions) peuvent être implémentées sous forme de lignes de codes (au sens logiciel du terme) au sein de moyens déjà existants dans le récepteur.

Par exemple, le récepteur ou chacun des éléments qui le compose, peut être implémenté au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le procédé selon l'invention peut se réaliser sur une machine de calcul reprogrammable (un processeur ou un micro-contrôleur par exemple), déjà existant ou non, exécutant un programme comprenant une séquence d'instructions, ou sur une machine de calcul dédiée (par exemple un ensemble de portes logiques comme un FPGA ou un ASIC, ou tout autre module matériel).

Les domaines d'application de l'invention peuvent être, entre autres, ceux de la navigation aéronautique, de la navigation terrestre, de la navigation spatiale, de la navigation maritime et sous-marine.

**Revendications**

1. Procédé de contrôle d'intégrité du traitement d'un signal de radionavigation émis par un satellite ($SAT_i$) d'un système de positionnement par satellites, ledit signal étant reçu par un récepteur (1) comportant des moyens de réception (2) et des moyens de traitement (3, 4, 5), lesdits moyens de traitement comprenant un filtre linéaire anti-interférence (4), ledit procédé de contrôle d'intégrité étant **caractérisé en ce qu'**il comporte au moins une première phase de détection d'un risque de faux accrochage comprenant les étapes suivantes :

   - une étape de récupération d'une fonction d'auto-corrélation théorique nominale ($A_0$) du signal reçu non traité par le filtre linéaire anti-interférence ;
   - une étape de détermination d'une fonction d'auto-corrélation théorique moyenne (A) dudit signal reçu et traité par le filtre linéaire anti-interférence sur une période d'intégration ($T_{moyen}$) définie ;
   - une étape de détermination du nombre de maximum locaux du module ou du module au carré de la fonction d'auto-corrélation théorique moyenne, un risque de faux accrochage étant détecté si ledit nombre de maximum locaux est supérieur ou égal à deux.

2. Procédé selon la revendication 1, **caractérisé en ce qu'**il comprend une étape de détermination d'un filtre anti-interférence moyen sur la période d'intégration ($T_{moyen}$), préalablement à l'étape de détermination de la fonction d'auto-corrélation théorique moyenne (A), et **en ce que** ladite fonction d'auto-corrélation théorique moyenne (A) est déterminée à partir de la fonction d'auto-corrélation théorique nominale ($A_0$) et dudit filtre anti-interférence moyen.

3. Procédé selon la revendication 2, **caractérisé en ce que** le filtre anti-interférence moyen sur la période d'intégration ($T_{moyen}$) est déterminé à partir des différentes valeurs des coefficients du filtre anti-interférence calculés sur ladite période d'intégration.

4. Procédé selon l'une des revendications 1 à 3, **caractérisé en ce qu'**il comprend en outre :

   - une étape de définition d'un premier seuil (S1), ledit premier seuil étant fonction de l'écart entre le rapport signal sur bruit maximum et un seuil de poursuite ;

   et **en ce que** le nombre de maximum locaux déterminés correspond au nombre de maximum locaux pour lesquels la valeur du module ou du module au carré de la fonction d'auto-corrélation moyenne finale est supérieure ou égale audit premier seuil (S1).

5. Procédé selon la revendication 4, **caractérisé en ce que** ledit premier seuil (S1) est défini par la formule :

$$S1 = \frac{\text{Max}(\|\max(A_0)\|^2)}{10^{\frac{x}{10}}}$$

où x représente l'écart entre le rapport signal sur bruit maximum et un seuil de poursuite et $A_0$ la fonction d'auto-corrélation théorique nominale.

6. Procédé selon l'une des revendications 1 à 5, **caractérisé en ce qu'**il comprend en outre une étape de déclenchement d'alarme si le nombre de maximum locaux déterminés est supérieur ou égal à deux.

7. Procédé selon l'une des revendications 1 à 6, **caractérisé en ce que** les moyens de traitement du signal reçu comprennent un canal de traitement par satellite, chaque canal comporte une boucle de code apte d'une part à générer localement un code d'étalement caractéristique du satellite ($SAT_s$) associé audit canal de manière à former un signal local et apte d'autre part à asservir ledit signal local avec ledit signal reçu en utilisant une voie de corrélation entre ledit signal reçu et ledit signal local, et **en ce que** la période d'intégration ($T_{moyen}$) est fonction de la période ($T_{boucle}$) de ladite boucle de code.

8. Procédé selon l'une des revendications précédentes, **caractérisé en ce que** les moyens de traitement du signal reçu comprennent un canal de traitement par satellite, chaque canal comporte une boucle de code apte à générer localement des codes d'étalement caractéristiques du satellite $(SAT_s)$ associé audit canal, lesdits codes comprenant au moins un code ponctuel, un code retard et/ou un code avance formant chacun un signal local, chaque signal local ponctuel, retard et/ou avance étant corrélé avec le signal reçu en utilisant respectivement une voie de corrélation ponctuelle, une voie de corrélation retard et/ou une voie de corrélation avance, et **en ce que** ledit procédé comporte en outre une deuxième phase de détection d'un faux accrochage, ladite deuxième phase comprenant :

- une étape de calcul de vraisemblance entre la fonction d'auto-corrélation théorique moyenne (A) et une fonction d'auto-corrélation mesurée $(A_{mes})$ pour chacune de l'ensemble des voies de corrélation ponctuelles, retard et/ou avance ;
- une étape de comparaison du résultat de calcul de vraisemblance avec un deuxième seuil (S2), un faux accrochage étant détecté par un résultat du calcul de vraisemblance inférieur audit deuxième seuil.

9. Procédé selon la revendication 8, **caractérisé en ce que** le résultat de l'étape de calcul de vraisemblance utilise un critère nominal (Critère0) de vraisemblance défini selon la formule :

$$\text{Critère0} = \frac{\left(\sum_{i=1}^{NC} A(q_i).A_{mes}(q_i)\right)^2}{\left(\sum_{i=0}^{NC}\|A(q_i)\|^2\right)\left(\sum_{i=0}^{NC}\|A_{mes}(q_i)\|^2\right)}$$

où $q_i$ est la position de la voie de corrélation n°i et NC le nombre de voies de corrélations.

10. Procédé selon l'une des revendications 8 ou 9, **caractérisé en ce qu'**il comporte en outre une troisième phase de recherche du maximum local principal, ladite troisième phase effectuant une recherche du maximum local principal si le résultat du calcul de vraisemblance est inférieur au deuxième seuil (S2), ladite troisième phase comprenant les étapes suivantes :

- une j-ème étape de calcul de vraisemblance entre la fonction d'auto-corrélation théorique moyenne (A) translatée d'une j-ème valeur de translation $(d_j)$ par rapport à la position $(q_i)$ des voies de corrélation, et la fonction d'auto-corrélation mesurée $(A_{mes})$ pour chacune de l'ensemble des voies de corrélation, la j-ème valeur de translation $(d_j)$ correspondant à un j-ème maximum local ;
- une étape de comparaison du résultat du j-ème calcul de vraisemblance avec un troisième seuil (S3), un résultat du j-ème calcul de vraisemblance supérieur audit troisième seuil permettant de déterminer si la j-ème valeur de translation $(d_j)$ correspond au maximum local principal.

11. Procédé selon la revendication 10, **caractérisé en ce que** le résultat de la j-ème étape de calcul de vraisemblance utilise un j-ème critère (Critère j) de vraisemblance défini selon la formule **:**

$$\text{Critère j} = \frac{\left(\sum_{i=1}^{NC} A(q_i + d_j).A_{calc}(q_i)\right)^2}{\left(\sum_{i=0}^{NC}\|A(q_i + d_j)\|^2\right)\left(\sum_{i=0}^{NC}\|A_{calc}(q_i)\|^2\right)}$$

où $d_j$ est la j-ème valeur de translation, $q_i$ est la position de la i-ème voie de corrélation et NC le nombre de voies de corrélations.

12. Récepteur (1) d'un système de positionnement par satellites comportant des moyens de réception (2) aptes à capter un signal émis par lesdits satellites et des moyens de traitement (3, 4, 5) couplés auxdits moyens de réception et aptes à traiter un signal reçu, lesdits moyens de traitement comprenant des moyens de filtrage anti-interférence (4), ledit récepteur comprenant une première fonction (44, 53) apte à implémenter la première phase de détermination d'un risque de faux accrochage du procédé selon l'une des revendications 1 à 7.

13. Récepteur (1) selon la revendication 12 comprenant en outre une deuxième fonction $(54_s)$ couplée à la première fonction (44, 53) et apte à implémenter la deuxième phase de détection d'un faux accrochage du procédé selon l'une des revendications 8 ou 9.

14. Récepteur (1) selon la revendication 13 comprenant en outre une troisième fonction $(55_s)$ couplée à la première fonction (44, 53) et à la deuxième fonction ($54_s$) et apte à implémenter la troisième phase de recherche du maximum local principal du procédé selon l'une des revendications 10 ou 11.

**Patentansprüche**

1. Verfahren zum Prüfen der Integrität der Verarbeitung eines von einem Satelliten ($SAT_i$) eines Satellitenpositionierungssystems gesendeten Funknavigationssignals, wobei das Signal von einem Empfänger (1) empfangen wird, der Empfangsmittel (2) und Verarbeitungsmittel (3, 4, 5) aufweist, wobei die Verarbeitungsmittel ein lineares Anti-Interferenzfilter (4) umfassen, wobei das Integritätsprüfverfahren **dadurch gekennzeichnet ist, dass** es mindestens eine erste Phase des Erkennens eines Risikos eines falschen Aufrastens aufweist, das die folgenden Schritte umfasst:

   - einen Schritt des Wiederherstellens einer nominalen theoretischen Autokorrelationsfunktion ($A_0$)des empfangenen Signals, das nicht durch das lineare Anti-Interferenzfilter verarbeitet wurde;
   - einen Schritt des Bestimmens einer mittleren theoretischen Autokorrelationsfunktion (A) des empfangenen und vom linearen Anti-Interferenzfilter verarbeiteten Signals über eine definierte Integrationsperiode ($T_{mittel}$);
   - einen Schritt des Bestimmens der Anzahl von lokalen Maxima des Moduls oder des Moduls zum Quadrat der mittleren theoretischen Autokorrelationsfunktion, wobei ein Risiko eines falschen Aufrastens erkannt wird, wenn die Anzahl von lokalen Maxima gleich oder größer zwei ist.

2. Verfahren nach Anspruch 1, **dadurch gekennzeichnet, dass** es einen Schritt des Bestimmens eines mittleren Anti-Interferenzfilters über die Integrationsperiode ($T_{mittel}$) vor dem Schritt des Bestimmens der mittleren theoretischen Autokorrelationsfunktion (A) umfasst, und dadurch, dass die mittlere theoretische Autokorrelationsfunktion (A) auf der Basis der nominalen theoretischen Autokorrelationsfunktion ($A_0$) und des mittleren Anti-Interferenzfilters bestimmt wird.

3. Verfahren nach Anspruch 2, **dadurch gekennzeichnet, dass** das mittlere Anti-Interferenzfilter über die Integrationsperiode ($T_{mittel}$) auf der Basis der verschiedenen Werte der über die Integrationsperiode berechneten Koeffizienten des Anti-Interferenzfilters bestimmt wird.

4. Verfahren nach einem der Ansprüche 1 bis 3, **dadurch gekennzeichnet, dass** es ferner Folgendes umfasst:

   - einen Schritt des Definierens eines ersten Schwellenwerts (S1), wobei der erste Schwellenwert eine Funktion der Abweichung zwischen dem maximalen Signal-Rausch-Verhältnis und einem Tracking-Schwellenwert ist;

   und dadurch, dass die Anzahl von bestimmten lokalen Maxima der Anzahl von lokalen Maxima entspricht, für die der Wert des Moduls oder des Moduls zum Quadrat der endgültigen mittleren Autokorrelationsfunktion gleich dem oder größer als der erste(n) Schwellenwert (S1) ist.

5. Verfahren nach Anspruch 4, **dadurch gekennzeichnet, dass** der erste Schwellenwert (S1) durch die folgende Formel definiert ist:

$$S1 = \frac{\text{Max}(\|\max(A_0)\|^2)}{10^{\frac{x}{10}}}$$

   wobei x die Abweichung zwischen dem maximalen Signal-Rausch-Verhältnis und einem Tracking-Schwellenwert und $A_0$ die nominale theoretische Autokorrelationsfunktion darstellt.

6. Verfahren nach einem der Ansprüche 1 bis 5, **dadurch gekennzeichnet, dass** es ferner einen Schritt des Auslösens eines Alarms umfasst, wenn die Anzahl ermittelter lokaler Maxima gleich oder größer zwei ist.

7. Verfahren nach einem der Ansprüche 1 bis 6, **dadurch gekennzeichnet, dass** die Mittel zur Verarbeitung des empfangenen Signals einen Verarbeitungskanal pro Satellit umfassen, jeder Kanal eine Codeschleife aufweist, die einerseits lokal einen charakteristischen Spreizcode des Satelliten ($SAT_s$) erzeugen kann, der mit dem Kanal assoziiert ist, um ein lokales Signal zu bilden, und die andererseits das lokale Signal mit dem empfangenen Signal unter Verwendung eines Korrelationspfads zwischen dem empfangenen Signal und dem lokalen Signal regeln kann, und dadurch, dass die Integrationsperiode ($T_{mittel}$) eine Funktion der Periode ($T_{Schleife}$) der Codeschleife ist.

8. Verfahren nach einem der vorhergehenden Ansprüche, **dadurch gekennzeichnet, dass** die Mittel zur Verarbeitung des empfangenen Signals einen Satellitenverarbeitungskanal umfassen, jeder Kanal eine Codeschleife aufweist, die lokal Spreizcodes erzeugen kann, die für den mit dem Kanal assoziierten Satelliten ($SAT_s$) charakteristisch sind, wobei die Codes mindestens einen Punktcode, einen Verzögerungscode und/oder einen Voreilungscode umfassen, die jeweils ein lokales Signal bilden, wobei jedes lokale Punkt-, Verzögerungs- und/oder Voreilungssignal mit dem empfangenen Signal korreliert wird, indem jeweils ein Punktkorrelationspfad, ein Verzögerungskorrelationspfad und/oder ein Voreilungskorrelationspfad verwendet wird, und dadurch, dass das Verfahren ferner eine zweite Phase des Erkennens eines falschen Aufrastens aufweist, wobei die zweite Phase Folgendes umfasst:

- einen Schritt des Berechnens der Wahrscheinlichkeit zwischen der mittleren theoretischen Autokorrelationsfunktion (A) und einer gemessenen Autokorrelationsfunktion ($A_{mes}$) für jeden der Gesamtheit der Punkt-, Verzögerungs- und/oder Voreilungskorrelationspfade;
- einen Schritt des Vergleichens des Ergebnisses der Wahrscheinlichkeitsberechnung mit einem zweiten Schwellenwert (S2), wobei ein falsches Aufrasten daran erkannt wird, dass ein Ergebnis der Wahrscheinlichkeitsberechnung niedriger als der zweite Schwellenwert ist.

9. Verfahren nach Anspruch 8, **dadurch gekennzeichnet, dass** das Ergebnis des Schritts der Wahrscheinlichkeitsberechnung ein nominales Wahrscheinlichkeitskriterium (Kriterium0) verwendet, das gemäß der folgenden Formel definiert ist:

$$\text{Kriterium0} = \frac{\left(\sum_{i=1}^{NC} A(q_i).A_{mes}(q_i)\right)^2}{\left(\sum_{i=0}^{NC}\|A(q_i)\|^2\right)\left(\sum_{i=0}^{NC}\|A_{mes}(q_i)\|^2\right)}$$

wobei $q_i$ die Position des Korrelationspfads Nr. i und NC die Anzahl der Korrelationspfade ist.

10. Verfahren nach einem der Ansprüche 8 oder 9, **dadurch gekennzeichnet, dass** es ferner eine dritte Phase des Suchens nach dem lokalen Hauptmaximum aufweist, wobei die dritte Phase eine Suche nach dem lokalen Hauptmaximum durchführt, wenn das Ergebnis der Wahrscheinlichkeitsberechnung kleiner als der zweite Schwellenwert (S2) ist, wobei die dritte Phase die folgenden Schritte umfasst:

- einen j-ten Schritt des Berechnens der Wahrscheinlichkeit zwischen der mittleren theoretischen Autokorrelationsfunktion (A), die um einen j-ten Translationswert ($d_j$) in Bezug auf die Position ($q_i$) der Korrelationspfade verschoben wurde, und der gemessenen Autokorrelationsfunktion ($A_{mes}$) für jeden der Gesamtheit der Korrelationspfade, wobei der j-te Translationswert ($d_j$) einem j-ten lokalen Maximum entspricht;
- einen Schritt des Vergleichens des Ergebnisses der j-ten Wahrscheinlichkeitsberechnung mit einem dritten Schwellenwert (S3), wobei ein Ergebnis der j-ten Wahrscheinlichkeitsberechnung größer als der dritte Schwellenwert es ermöglicht, festzustellen, ob der j-te Translationswert ($d_j$) dem lokalen Hauptmaximum entspricht.

11. Verfahren nach Anspruch 10, **dadurch gekennzeichnet, dass** das Ergebnis des j-ten Schritts der Wahrscheinlichkeitsberechnung ein j-tes Wahrscheinlichkeitskriterium (Kriterium j) verwendet, das gemäß der folgenden Formel definiert ist:

$$\text{Kriterium j} = \frac{\left(\sum_{i=1}^{NC} A(q_i + d_j).A_{calc}(q_i)\right)^2}{\left(\sum_{i=0}^{NC}\|A(q_i + d_j)\|^2\right)\left(\sum_{i=0}^{NC}\|A_{calc}(q_i)\|^2\right)}$$

wobei $d_j$ der j-te Translationswert ist, $q_i$ die Position des i-ten Korrelationspfads ist und NC die Anzahl der Korrelationspfade ist.

12. Empfänger (1) eines Satellitenpositionierungssystems, das Empfangsmittel (2), die ein von den Satelliten ausgesendetes Signal empfangen können, und Verarbeitungsmittel (3, 4, 5) aufweist, die mit den Empfangsmitteln gekoppelt sind und ein empfangenes Signal verarbeiten können, wobei die Verarbeitungsmittel Anti-Interferenzfiltermittel (4) umfassen, wobei der Empfänger eine erste Funktion (44, 53) umfasst, die die erste Phase des Bestimmens eines Risikos eines falschen Aufrastens des Verfahrens nach einem der Ansprüche 1 bis 7 implementieren kann.

13. Empfänger (1) nach Anspruch 12, der ferner eine zweite Funktion ($54_s$) umfasst, die mit der ersten Funktion (44, 53) gekoppelt ist und die die zweite Phase des Erkennens eines falschen Aufrastens des Verfahrens nach einem der Ansprüche 8 oder 9 implementieren kann.

14. Empfänger (1) nach Anspruch 13, der ferner eine dritte Funktion ($55_s$) umfasst, die mit der ersten Funktion (44, 53) und der zweiten Funktion ($54_s$) gekoppelt ist und die die dritte Phase des Suchens nach dem lokalen Hauptmaximum des Verfahrens nach einem der Ansprüche 10 oder 11 implementieren kann.

**Claims**

1. A method for checking the integrity of the processing of a radio-navigation signal emitted by a satellite ($SAT_i$) of a satellite positioning system, said signal being received by a receiver (1) having reception means (2) and processing means (3, 4, 5), said processing means comprising a linear anti-interference filter (4), said integrity checking method being **characterised in that** it has at least a first phase of detection of a risk of false lock-on comprising the following steps:

   - a step of recovery of a nominal theoretical self-correlation function ($A_0$) of the received signal not processed by the linear anti-interference filter;
   - a step of determination of a mean theoretical self-correlation function (A) of said signal received and processed by the linear anti-interference filter over a defined integration period ($T_{mean}$);
   - a step of determination of the number of local maxima of the modulus or of the modulus squared of the mean theoretical self-correlation function, a risk of false lock-on being detected if said number of local maxima is greater than or equal to two.

2. The method according to claim 1, **characterised in that** it comprises a step of determination of a mean anti-interference filter over the integration period ($T_{mean}$), prior to the step of determination of the mean theoretical self-correlation function (A), and **in that** said mean theoretical self-correlation function (A) is determined from the nominal theoretical self-correlation function ($A_0$) and from said mean anti-interference filter.

3. The method according to claim 2, **characterised in that** the mean anti-interference filter over the integration period ($T_{mean}$) is determined from the different values of the coefficients of the anti-interference filter calculated over said integration period.

4. The method according to one of claims 1 to 3, **characterised in that** it further comprises:

   - a step of definition of a first threshold (S1), said first threshold being a function of the deviation between the maximum signal-to-noise ratio and a tracking threshold;

   and **in that** the number of local maxima determined corresponds to the number of local maxima for which the value of the modulus or of the modulus squared of the final mean self-correlation function is greater than or equal to said first threshold (S1).

5. The method according to claim 4, **characterised in that** said first threshold (S1) is defined by the formula:

$$S1 = \frac{\text{Max}(\|\max(A_0)\|^2)}{10^{\frac{x}{10}}}$$

in which x represents the deviation between the maximum signal-to-noise ratio and a tracking threshold and $A_0$ represents the nominal theoretical self-correlation function.

6. The method according to one of claims 1 to 5, **characterised in that** it further comprises a step of triggering an alarm if the number of local maxima determined is greater than or equal to two.

7. The method according to one of claims 1 to 6, **characterised in that** the received signal processing means comprise a processing channel by satellite, each channel has a code loop capable, on the one hand, of locally generating a spreading code characteristic of the satellite ($SAT_s$) associated with said channel so as to form a local signal and capable, on the other hand, of interlocking said local signal with said received signal by using a correlation pathway between said received signal and said local signal, and **in that** the integration period ($T_{mean}$) is a function of the period ($T_{loop}$) of said code loop.

8. The method according to one of the preceding claims, **characterised in that** the received signal processing means comprise a processing channel by satellite, each channel has a code loop capable of locally generating spreading codes characteristic of the satellite ($SAT_s$) associated with said channel, said codes comprising at least one punctual code, one late code and/or one early code each forming a local signal, each punctual, late and/or early local signal being correlated with the received signal by using, respectively, a punctual correlation pathway, a late correlation pathway and/or an early correlation pathway, and **in that** said method further has a second phase of detection of a false lock-on, said second phase comprising:

   - a step of calculating the probability between the mean theoretical self-correlation function (A) and a measured self-correlation function ($A_{mes}$) for each of the set of the punctual, late and/or early correlation pathways;
   - a step of comparing the result of probability calculation with a second threshold (S2), a false lock-on being detected by a result of the probability calculation lower than said second threshold.

9. The method according to claim 8, **characterised in that** the result of the step of probability calculation uses a nominal probability criterion (Criterion0) defined according to the formula:

$$\text{Criterion0} = \frac{\left(\sum_{i=1}^{NC} A(q_i).A_{mes}(q_i)\right)^2}{\left(\sum_{i=0}^{NC}\|A(q_i)\|^2\right)\left(\sum_{i=0}^{NC}\|A_{mes}(q_i)\|^2\right)}$$

in which $q_i$ is the position of the correlation pathway No i and NC is the number of correlation pathways.

10. The method according to one of claims 8 or 9, **characterised in that** it further has a third phase of searching for the main local maximum, said third phase performing a search for the main local maximum if the result of the probability calculation is lower than the second threshold (S2), said third phase comprising the following steps:

   - a j-th step of calculation of probability between the mean theoretical self-correlation function (A) translated by a j-th translation value ($d_j$) relative to the position ($q_i$) of the correlation pathways, and the measured self-correlation function ($A_{mes}$) for each of the set of the correlation pathways, the j-th translation value ($d_j$) corresponding to a j-th local maximum;
   - a step of comparison of the result of the j-th probability calculation with a third threshold (S3), a result of the j-th probability calculation above said third threshold making it possible to determine whether the j-th translation value ($d_j$) corresponds to the main local maximum.

11. The method according to claim 10, **characterised in that** the result of the j-th step of probability calculation uses a j-th probability criterion (Criterion j) defined according to the formula:

$$\text{Criterion j} = \frac{\left(\sum_{i=1}^{NC} A(q_i + d_j).A_{calc}(q_i)\right)^2}{\left(\sum_{i=0}^{NC}\|A(q_i + d_j)\|^2\right)\left(\sum_{i=0}^{NC}\|A_{calc}(q_i)\|^2\right)}$$

in which $d_j$ is the j-th translation value, $q_i$ is the position of the i-th correlation pathway and NC is the number of correlation pathways.

12. A receiver (1) of a satellite positioning system having reception means (2) capable of picking up a signal emitted by said satellites and processing means (3, 4, 5) coupled to said reception means and capable of processing a received signal, said processing means comprising anti-interference filtering means (4), said receiver comprising a first function (44, 53) capable of implementing the first phase of determination of a risk of false lock-on of the method according to one of claims 1 to 7.

**13.** The receiver (1) according to claim 12 further comprising a second function ($54_s$) coupled to the first function (44, 53) and capable of implementing the second phase of detection of a false lock-on of the method according to one of claims 8 or 9.

**14.** The receiver (1) according to claim 13, further comprising a third function ($55_s$) coupled to the first function (44, 53) and to the second function ($54_s$) and capable of implementing the third phase of searching for the main local maximum of the method according to one of claims 10 or 11.

[Fig. 1]

[Fig. 2]

**Corrélation spatio-temporelle**

[Fig.3]

**Opérateur de corrélation spatiale**

[Fig. 4]

[Fig. 5]

[Fig. 6A]

A(q) théorique

[Fig. 6B]

$\left\|A\left(\frac{\tau}{T_e}\right)\right\|^2$ théorique

$\left\|A(q_i)\right\|^2$ mesurée

$q_1$    $q_2$    $q_3$ $q_4$ $q_5$    $q_6$    $q_7$    $\tau/T_e$

Corrélateurs avance

Corrélateur ponctuel

Corrélateurs retard

[Fig. 7A]

$$\left\|\Lambda\left(\frac{\tau}{T_e}+d_j\right)\right\|^2$$
théorique translatée

$$\left\|A\left(\frac{\tau}{T_e}\right)\right\|^2 \text{théorique}$$

$q_1$   $q_2$   $q_3$   $q_4$   $q_5$   $q_6$   $q_7$   $\tau/T_e$

Corrélateurs
avance

Corrélateur
ponctuel

Corrélateurs
retard

[Fig. 7B]

**EP 3 709 058 B1**

## RÉFÉRENCES CITÉES DANS LA DESCRIPTION

**Documents brevets cités dans la description**

- FR 2892202
- FR 2898998
- FR 2981168
- FR 3017716